# EUROPÄISCHE PATENTANMELDUNG

(11) **EP 4 086 419 A1**
(43) Veröffentlichungstag der Anmeldung: **09.11.2022**
(21) Anmeldenummer: 22181817.2
(22) Anmeldetag: 17.05.2016
(51) Int. Cl.: E05F 1/16, E05C 19/02, E05F 1/10

(54) **AUSSTOSSVORRICHTUNG FÜR EIN BEWEGBARES MÖBELTEIL**

(30) Priorität: 09.06.2015 AT 3582015
(62) Teilanmeldung aus: 16735565.0
(71) Anmelder: Julius Blum GmbH, 6973 Höchst (AT)
(72) Erfinder: DUBACH, Fredi, 8344 Bäretwil (CH)
(74) Vertreter: Torggler & Hofmann Patentanwälte - Innsbruck

(57) **Zusammenfassung**

Ausstoßvorrichtung (1) zum Ausstoßen eines bewegbaren Möbelteils (2) aus einer Schließstellung (SS) entlang eines Öffnungswegs (O) in eine Offenstellung (OS), mit einem Träger (3) und einer Koppelvorrichtung (26) zum Koppeln der Ausstoßvorrichtung (1) mit dem bewegbaren Möbelteil (2), wobei die Koppelvorrichtung (26) ein relativ zum Träger (3) bewegbares Koppelstück (25) und ein am bewegbaren Möbelteil (2) oder an einem Möbelkorpus (22) angeordnetes Koppelgegenstück (24) aufweist, wobei die Koppelvorrichtung (26) eine Koppelstellung (K) und eine Entkoppelstellung (EK) aufweist und über die in der Koppelstellung (K) befindliche Koppelvorrichtung (26) die Ausstoßvorrichtung (1) mit dem bewegbaren Möbelteil (2) koppelbar ist, mit einer Steuervorrichtung, durch die die Koppelvorrichtung (26) in Abhängigkeit vom Öffnungsweg (O) schaltbar ist, wobei bei einem vorbestimmten Öffnungsweg (VO) die Koppelvorrichtung (26) von der Koppelstellung (K) in die Entkoppelstellung (EK) gelangt.

## Beschreibung

Die vorliegende Erfindung betrifft eine Ausstoßvorrichtung zum Ausstoßen eines bewegbaren Möbelteils aus einer Schließstellung entlang eines Öffnungswegs in eine Offenstellung, mit einem Träger und einer Koppelvorrichtung zum Koppeln der Ausstoßvorrichtung mit dem bewegbaren Möbelteil, wobei die Koppelvorrichtung ein relativ zum Träger bewegbares Koppelstück und ein am bewegbaren Möbelteil angeordnetes Koppelgegenstück aufweist, wobei die Koppelvorrichtung eine Koppelstellung und eine Entkoppelstellung aufweist und über die in der Koppelstellung befindliche Koppelvorrichtung die Ausstoßvorrichtung mit dem bewegbaren Möbelteil koppelbar ist. Zudem betrifft die Erfindung ein Möbel mit einem Möbelkorpus, einem bewegbaren Möbelteil und einer solchen Ausstoßvorrichtung.

In der Möbelbeschlägeindustrie werden seit vielen Jahren diverse Hilfsmittel hergestellt und verkauft, um Bewegungen der bewegbaren Möbelteile zu unterstützen und für einen Bediener zu vereinfachen. Vor allem bei Ausstoßvorrichtungen gibt es dazu bereits diverse unterschiedliche Varianten. Solche Ausstoßvorrichtungen werden auch oft als Touch-Latch-Mechanismen oder als Tip-On-Vorrichtungen bezeichnet. Mit derartigen Vorrichtungen ist es möglich, in einer Schließstellung auf das bewegbare Möbelteil zu drücken, wodurch eine Entriegelung einer Verriegelungsvorrichtung erfolgt und dadurch bzw. danach das bewegbare Möbelteil durch die Ausstoßvorrichtung ausgestoßen wird.

Bei vielen solchen Ausstoßvorrichtungen erfolgt ein Spannen eines Ausstoßkraftspeichers beim Schließen, also wenn wieder aktiv auf die Ausstoßvorrichtung gedrückt wird. Andere bekannte Varianten sehen aber auch vor, dass der Ausstoßkraftspeicher möglichst direkt nach dem Ausstoßen durch die fortgesetzte Öffnungsbewegung des bewegbaren Möbelteils gespannt wird. Dazu ist es notwendig, das bewegbare Möbelteil mit der Ausstoßvorrichtung zu Koppeln.

Eine mögliche derartige Kopplungsvariante geht aus der AT 512 699 A1 hervor. Dabei wird ein an der Spitze der Ausstoßvorrichtung angeordnetes Koppelelement mit einem am bewegbaren Möbelteil angeordneten Mitnehmer gekoppelt. Die Koppelung kann dabei lösbar kraftschlüssig (z. B. magnetisch) oder lösbar formschlüssig (z. B. über eine Klemmvorrichtung) erfolgen.

Auch aus der WO 2013/017666 A2 geht einerseits eine magnetische Koppelung hervor, indem die Schranktüre ein auf die Stirnseite einer Spannstange ausgerichtetes Halteelement trägt, wobei das Halteelement als Magnet ausgebildet sein kann und die Spannstange mitführt. Andererseits ist auch ein nachgiebiger formschlüssiger Halt beschrieben, indem ein Endstück eines Auswurfelements Rastelemente aufweist, die mit Gegenrastelementen des Halteelements verrasten.

Schließlich kann auch noch auf die AT 008 629 U1 verwiesen werden, welche in den Fig. 14 bis 16 einen Formschluss zwischen einem freien Ende eines Hebels und einer am bewegbaren Möbelteil angeordnet Aufnahme zeigt. Der Formschluss zwischen dem freien Ende des Hebels und der Aufnahme ist durch die Ausstoßkraft der Antriebsvorrichtung lösbar ausgebildet.

Nachteilig bei der kraftschlüssigen (magnetischen) Koppelung ist, dass der Zeitpunkt der Entkoppelung von der Kraft zwischen den beteiligten Komponenten abhängt. Es kann also nicht genau bestimmt und eingestellt werden, an welcher Stelle des Öffnungswegs die Entkoppelung erfolgt. Bei den als formschlüssig bezeichneten Koppelungsvarianten ist kein eigentlicher Formschluss gegeben, sondern es liegt eine lösbare Verrastung über nachgiebige bzw. elastische Komponenten vor. Auch hier kann nicht immer genau garantiert werden, an welcher Stelle des Öffnungswegs die Entkoppelung erfolgt, da bei den sehr oft erfolgenden Koppel- und Entkoppelbewegungen die aneinander liegenden Teile verschleißen. Vor allem aber kann es bei beiden bekannten Varianten vorkommen, dass eine Entkoppelung bereits bei kurzfristigem, ruckartigem Ziehen am bewegbaren Möbelteil unerwünscht zu früh erfolgt.

Die Aufgabe der vorliegenden Erfindung besteht darin, eine zum Stand der Technik alternative bzw. verbesserte Ausstoßvorrichtung zu schaffen. Insbesondere soll eine sichere, zuverlässige und genaue Koppelung und Entkoppelung der Koppelvorrichtung garantiert werden.

Dies wird durch eine Ausstoßvorrichtung mit den Merkmalen von Anspruch 1 gelöst. Demnach ist erfindungsgemäß eine Steuervorrichtung vorgesehen, durch die die Koppelvorrichtung in Abhängigkeit vom Öffnungsweg schaltbar ist, wobei bei einem vorbestimmten Öffnungsweg die Koppelvorrichtung von der Koppelstellung in die Entkoppelstellung gelangt. Somit erfolgt eine Koppelung und Entkoppelung nicht aufgrund auf das Koppelstück und das Koppelgegenstück direkt einwirkender Kräfte, sondern es erfolgt ein weggesteuerte Koppelung und Entkoppelung. Insbesondere kann dadurch gar keine Entkoppelung an einer falschen (zu frühen) Stelle des Öffnungswegs erfolgen, da bis zur Schaltung in die Entkoppelstellung eine fixe Koppelung über die Steuervorrichtung garantiert ist. Die Stelle der Koppelung und Entkoppelung ist dadurch genau definiert.

Prinzipiell ist die genaue Art und Weise der Koppelung nebensächlich, solange in der Koppelstellung eine Entkoppelung nicht einfach durch ruckartige Bewegungen oder sonstige Einflüsse möglich ist. Für eine besonders sichere Koppelung ist aber bevorzugt vorgesehen, dass in der Koppelstellung zwischen dem Koppelstück und dem Koppelgegenstück ein formschlüssiger Halt vorliegt, wobei dieser formschlüssige Halt durch die Steuervorrichtung aufhebbar ist.

Die Steuervorrichtung kann an sich elektronisch ausgebildet sein. Bevorzugt ist die Steuervorrichtung allerdings mechanisch ausgebildet. Gemäß einem bevorzugten Ausführbeispiel ist für eine einfache Ausbildung der Steuervorrichtung vorgesehen, dass die Steuervorrichtung ein relativ zum Koppelstück bewegbares Koppel- und Entkoppelelement aufweist. Dabei ist das Koppel- und Entkoppelelement in einer Führungsbahn im Träger oder in einem Spannelement begrenzt bewegbar geführt.

Im Speziellen ist bei einer derartigen mechanischen Steuervorrichtung vorgesehen, dass während zumindest eines Teils der Öffnungsbewegung bis zum Erreichen des vorbestimmten Öffnungswegs das Koppelstück gemeinsam mit dem Koppel- und Entkoppelelement relativ zum Träger bewegbar ist und ab Erreichen des vorbestimmten Öffnungswegs einerseits das Koppel- und Entkoppelelement relativ zum Träger feststeht und andererseits das Koppelstück relativ zum Koppel- und Entkoppelelement bewegbar ist. Weiters ist hierzu bevorzugt vorgesehen, dass das Koppel- und Entkoppelelement einen Anschlag aufweist, über welches das Koppel- und Entkoppelelement bei Erreichen des vorbestimmten Öffnungswegs am Träger, vorzugsweise an einem Kopfteil des Trägers, ansteht. Somit bildet das Koppel- und Entkoppelelement und dessen Anschlag gemeinsam mit dem Gegenanschlag am Träger die wegabhängige Steuervorrichtung.

Durch das Koppel- und Entkoppelelement kann ein Riegel oder ein ähnliches Element derart bewegt werden, dass das Koppelstück nicht mehr fix im Koppelgegenstück gehalten wird. Bevorzugt ist für einen guten Halt vorgesehen, dass zumindest ein Kopfbereich des Koppelstücks durch das Koppel- und Entkoppelelement in der Koppelstellung spreizbar ist. Im Konkreten erfolgt dies dadurch, dass bei gespreiztem Kopfbereich des Koppelstücks die Koppelstellung zwischen Koppelstück und Koppelgegenstück dadurch gegeben ist, dass ein formschlüssiger Halt zwischen dem Kopfbereich des Koppelstücks und einem Aufnahmebereich des Koppelgegenstücks vorliegt, wogegen bei ungespreiztem Kopfbereich des Koppelstücks die Entkoppelstellung zwischen Koppelstück und Koppelgegenstück dadurch gegeben ist, dass eine lose Verbindung zwischen dem Kopfbereich des Koppelstücks und dem Aufnahmebereich des Koppelgegenstücks vorliegt.

Der Kopfbereich des Koppelstücks ist dabei bevorzugt derart ausgebildet, dass er zumindest zwei, voneinander beabstandete und zueinander biegbare Fortsätze aufweist. Für das Spreizen fährt eine Spitze des Koppel- und Entkoppelelements in einen Spalt zwischen den Fortsätzen, sodass sich diese Fortsätze nicht mehr zueinander biegen können. Eine Entkoppelung des Kopfbereichs aus einem Aufnahmebereich des Koppelgegenstücks ist dadurch nicht möglich. Erst wenn die Spitze des Koppel- und Entkoppelelements sich nicht mehr zwischen den Fortsätzen befindet, können sich die Fortsätze bei einer Relativbewegung des Aufnahmebereichs zum Kopfbereich verbiegen und die lose Verbindung wird aufgehoben.

Um nicht nur eine Koppelung zwischen Ausstoßvorrichtung und bewegbarem Möbelteil zu ermöglichen sondern auch ein Ausstoßen, ist bevorzugt ein Ausstoßelement zum Ausstoßen des bewegbaren Möbelteils aus der Schließstellung in eine Offenstellung und ein das Ausstoßelement in Öffnungsrichtung des bewegbaren Möbelteils kraftbeaufschlagender Ausstoßkraftspeicher vorgesehen.

Weiters ist eine Verriegelungsvorrichtung zum Verriegeln des Ausstoßelements in einer Verriegelungsstellung vorgesehen, wobei die Verriegelungsvorrichtung durch Überdrücken des bewegbaren Möbelteils in eine hinter der Schließstellung liegende Überdrückstellung entriegelbar ist.

Zudem weist die Ausstoßvorrichtung eine Spannvorrichtung zum Spannen des Ausstoßkraftspeichers, vorzugsweise durch Ziehen am bewegbaren Möbelteil in Öffnungsrichtung, auf. Dabei ist das Koppelstück der Koppelvorrichtung mit der Spannvorrichtung, vorzugsweise mit einem Spannelement der Spannvorrichtung, verbunden. Für eine materialsparende Ausbildung ist besonders bevorzugt vorgesehen, dass das Koppelstück einstückig mit diesem Spannelement der Spannvorrichtung ausgebildet ist.

Um nach dem Ausstoßen die einzelnen Komponenten nicht ungünstigerweise aus dem Möbelkorpus vorstehen zu lassen, ist eine Rückholvorrichtung mit einem Rückholkraftspeicher zum Bewegen der Spannvorrichtung in eine Rückholstellung vorgesehen.

Schutz wird auch begehrt für ein Möbel mit einem Möbelkorpus, einem bewegbaren Möbelteil und einer erfindungsgemäßen Ausstoßvorrichtung für das bewegbare Möbelteil. Die Ausstoßvorrichtung kann dabei entweder am Möbelkorpus oder am bewegbaren Möbelteil angeordnet sein. Es ist auch möglich, dass zusätzlich eine, vorzugsweise gedämpfte, Einziehvorrichtung zum Einziehen des bewegbaren Möbelteils aus einer Offenstellung in die Schließstellung vorgesehen ist. Bei einem solchen Möbel ist vorgesehen, dass über die in der Koppelstellung befindliche Koppelvorrichtung die Ausstoßvorrichtung mit dem bewegbaren Möbelteil gekoppelt ist, wogegen in der Entkoppelstellung das bewegbare Möbelteil von der Koppelvorrichtung freigegeben ist.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: ein Möbel mit einer Ausstoßvorrichtung gemäß einem ersten Ausführungsbeispiel,
- Fig. 2: eine Explosionsdarstellung Ausstoßvorrichtung gemäß dem ersten Ausführungsbeispiel,
- Fig. 3: diese Ausstoßvorrichtung in zusammengebautem Zustand und
- Fig. 4 bis 20: den Bewegungsablauf beim Ausstoßen und Spannen der Ausstoßvorrichtung gemäß dem ersten Ausführungsbeispiel,
- Fig. 21: ein Möbel mit einer Ausstoßvorrichtung gemäß einem zweiten Ausführungsbeispiel,
- Fig. 22: eine Explosionsdarstellung der Ausstoßvorrichtung gemäß dem zweiten Ausführungsbeispiel,
- Fig. 23: diese Ausstoßvorrichtung in zusammengebautem Zustand und
- Fig. 24 bis 37: den Bewegungsablauf einer Ausstoßvorrichtung gemäß dem zweiten Ausführungsbeispiel.
- Fig. 38: eine perspektivische Ansicht eines Möbels mit einer Ausstoßvorrichtung gemäß einem dritten Ausführungsbeispiel,
- Fig. 39: diese Ausstoßvorrichtung in einer Explosionsdarstellung,
- Fig. 40: eine perspektivische Darstellung der zusammengebauten Ausstoßvorrichtung,
- Fig. 41 bis 49: in einer Draufsicht den Bewegungsablauf der Ausstoßvorrichtung gemäß dem dritten Ausführungsbeispiel beim Ausstoßen, Spannen und Rückholen,
- Fig. 50: den Bewegungsablauf der Ausstoßvorrichtung überblicksmäßig auf einer Seite,
- Fig. 51a und 51b: ein viertes Ausführungsbeispiel einer Koppelvorrichtung in Koppelstellung,
- Fig. 52a und 52b: diese Koppelvorrichtung in Entkoppelstellung und loser Verbindung und
- Fig. 53a und 53b: die Koppelvorrichtung gemäß dem vierten Ausführungsbeispiel in Entkoppelstellung und abgehobenem Möbelteil.

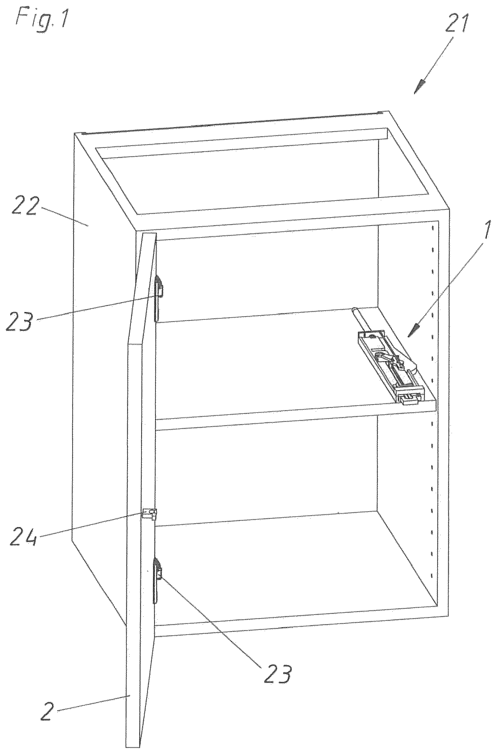

Fig. 1 zeigt ein Möbel 21 mit einem Möbelkorpus 22 und einem bewegbaren Möbelteil 2 in Form einer Möbeltüre. Dieses bewegbare Möbelteil 2 ist über zwei Scharniere 23 am Möbelkorpus 22 um eine vertikale Achse verschwenkbar gelagert. In zumindest eines dieser Scharniere 23 kann eine nicht dargestellte Dämpfvorrichtung für eine Schließbewegung integriert sein. Am Möbelkorpus 22 ist eine Ausstoßvorrichtung 1 gemäß einem ersten Ausführungsbeispiel angeordnet. Das Koppelgegenstück 24 dieser Ausstoßvorrichtung 1 ist am bewegbaren Möbelteil 2 fixiert. Rein zur Veranschaulichung ist dieses Koppelgegenstück 24 auch direkt im Bereich der Ausstoßvorrichtung 1 eingezeichnet. Tatsächlich ist natürlich nur jenes Koppelgegenstück 24 am bewegbaren Möbelteil 2 vorhanden. Grundsätzlich ist es bei allen Ausführungsbeispielen möglich, dass die Ausstoßvorrichtung 1 am bewegbaren Möbelteil 2 angeordnet ist und das Koppelgegenstück 24 am Möbelkorpus 22 angeordnet bzw. ausgebildet ist. Dadurch stößt sich die Ausstoßvorrichtung 1 sozusagen am Möbelkorpus 22 ab.

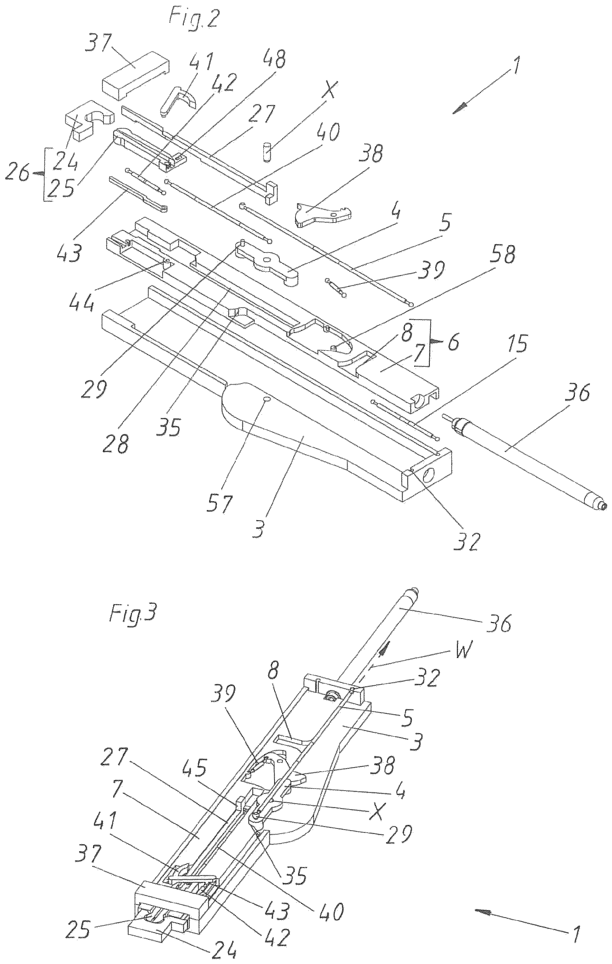

In Fig. 2 ist die Ausstoßvorrichtung 1 gemäß dem ersten Ausführungsbeispiel in einer Explosionsdarstellung zu sehen. Diese Ausstoßvorrichtung 1 weist als Basiselement eine Träger 3 auf, über welchen die Ausstoßvorrichtung 1 am Möbel 21 montiert ist. Gemeinsam mit einem nicht eingezeichneten Deckel kann dieser Träger 3 ein Gehäuse für die restlichen Komponenten der Ausstoßvorrichtung 1 bilden. Im Träger 3 ist das Spannelement 7 verschiebbar gelagert. Die Verschiebebewegung dieses Spannelements 7 wird durch die Dämpfvorrichtung 36 gedämpft. Der Rückholkraftspeicher 15 greift einerseits am Spannelement 7 und andererseits am Träger 3 an. Das Spannelement 7 bildet gemeinsam mit dem als Anschlag ausgebildeten Bewegungsübertragungselement 8 die Spannvorrichtung 6. Weiters ist ein Ausstoßelement 4 um die Drehachse X im Drehlager 57 des Trägers 3 drehbar gelagert. Der als Zugfeder ausgebildete Ausstoßkraftspeicher 5 greift einerseits über die Ausstoßelement-Kraftspeicherbasis 29 am Ausstoßelement 4 und andererseits an der Träger-Kraftspeicherbasis 32 des Trägers 3 an. Das Auslenkelement 38 ist übe den Drehlagerzapfen 58 am Spannelement 7 verschwenkbar gelagert. Zwischen Auslenkelement 38 und Spannelement 7 ist zusätzlich ein als Zugfeder ausgebildeter Auslenkkraftspeicher 39 vorgesehen. Weiters ist eine Koppelvorrichtung 26 vorgesehen. Diese Koppelvorrichtung 26 wird hauptsächlich durch das Koppelstück 25 und das Koppelgegenstück 24 gebildet. Das Koppelstück 25 ist in der Führungsbahn 28 des Spannelements 7 verschiebbar gelagert. Auch das Koppel- und Entkoppelelement 27 ist in dieser Führungsbahn 28 verschiebbar angeordnet. Zudem ist ein Koppelhebel 41 vorgesehen, welcher im Drehlager 44 des Spannelements 7 drehbar gelagert ist sowie einerseits im Langloch 48 des Koppelstücks 25 geführt ist und andererseits mit einem Ende des Koppelgegenstückanschlags 43 gelenkig verbunden ist. Weiters ist einer als Zugfeder ausgebildeter Koppelkraftspeicher 40 vorgesehen, welcher einerseits am Koppel- und Entkoppelelement 27 und andererseits am Koppelstück 25 angreift. Zudem ist ein ebenfalls als Zugfeder ausgebildeter Koppelhebel-Kraftspeicher 42 vorgesehen. Dieser Koppelhebel-Kraftspeicher 42 greift einerseits am Koppelhebel 41 und andererseits am Spannelement 7 an. Weiters ist ein mit dem Träger 3 verbindbares Kopfteil 37 vorgesehen.

In Fig. 3 ist die Ausstoßvorrichtung 1 gemäß dem ersten Ausführungsbeispiel in zusammengebautem Zustand ersichtlich. Bereits in dieser Darstellung gemäß Fig. 3 ist gut erkennbar, dass die Träger-Kraftspeicherbasis 32 und die Ausstoßelement-Kraftspeicherbasis 29 in einer die Drehachse X des Ausstoßelements 4 und die Wirklinie W enthaltenden Ebene liegen. Weiters ist auch der am Koppel- und Entkoppelelement 27 ausgebildete Anschlag 45 ersichtlich. Auch erkennbar ist in dieser Fig. 3, dass das Ausstoßelement 4 an der durch eine als Anschlag am Spannelement 7 ausgebildete Auslösevorrichtung 35 anliegt.

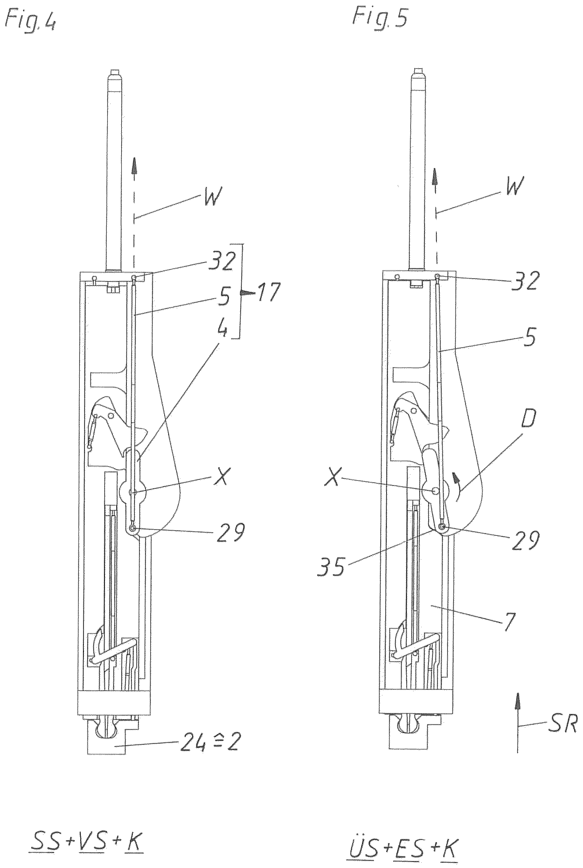

In Fig. 4 ist eine Draufsicht auf die Ausstoßvorrichtung 1 gemäß Fig. 3 dargestellt. Das am bewegbaren Möbelteil 2 befestigte Koppelgegenstück 24 repräsentiert dabei die Stellung des bewegbaren Möbelteils 2. Demnach befindet sich das bewegbare Möbelteil 2 in einer Schließstellung SS. Die Verriegelungsvorrichtung 17 befindet sich in der Verriegelungsstellung VS, in welcher die Wirkungslinie W des Ausstoßkraftspeichers 5 durch die Drehachse X führt. Die Wirkrichtung der Wirkungslinie W ist durch den Pfeil angegeben und zeigt in Schließrichtung SR. Da diese Wirkungslinie W durch die Drehachse X führt, kann sich die Kraft des gespannten Ausstoßkraftspeichers 5 nicht entfalten. Dadurch wird das Ausstoßelement 4 sozusagen in einem Totpunkt gehalten. Die Träger-Kraftspeicherbasis 32 (mitsamt dem Träger 3), der Ausstoßkraftspeicher 5 und das Ausstoßelement 4 bilden dadurch gemeinsam die Verriegelungsvorrichtung 17. Die Koppelvorrichtung 26 befindet sich in der Koppelstellung K, da das Koppelstück 25 mit dem Koppelgegenstück 24 gekoppelt ist.

Wenn ausgehend von dieser Stellung gemäß Fig. 4 in Schließrichtung SR auf das bewegbare Möbelteil 2 gedrückt wird, so gelangt dieses bewegbare Möbelteil 2 in die Überdrückstellung ÜS gemäß Fig. 5. Über das Koppelgegenstück 24 wird dabei das Spannelement 7 ebenfalls in Schließrichtung SR mitbewegt, wodurch der Anschlag der Auslösevorrichtung 35 das Ausstoßelement 4 in Drehrichtung D - also gegen den Uhrzeigersinn - um die Drehachse X dreht. Durch dieses Überdrücken gelangen somit die Drehachse X und die Wirkungslinie W in eine zueinander beabstandete, relative Entriegelungs-Lage ES. Somit ist die Verriegelungsvorrichtung 17 entriegelt.

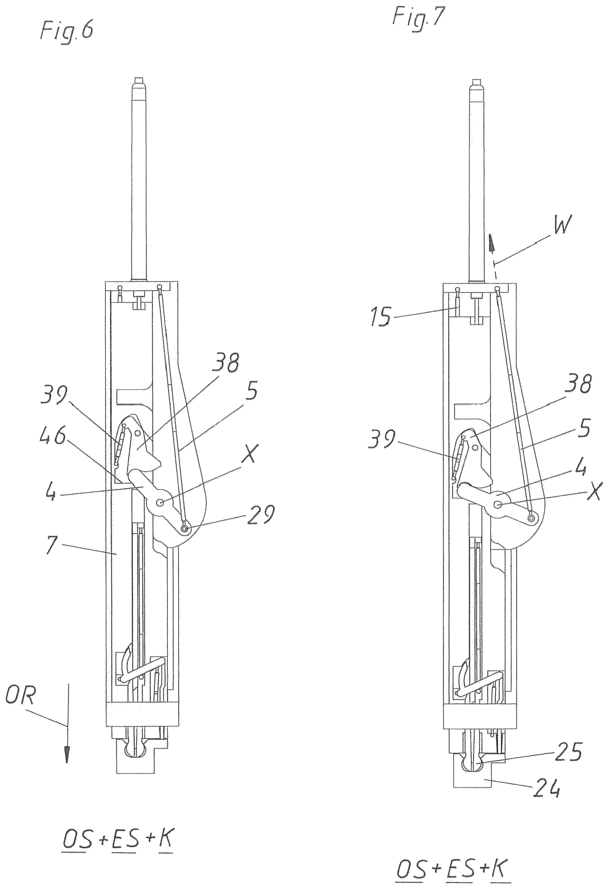

Ausgehend von dieser Entriegelungs-Lage gemäß Fig. 5 kann sich der Ausstoßkraftspeicher 5 entspannen, wodurch sich das Ausstoßelement 4 weiter in Drehrichtung D dreht (siehe Fig. 6). Dadurch gelangt das der Ausstoßelement-Kraftspeicherbasis 29 abgewandte Ende des Ausstoßelements 4 in Kontakt mit dem am Spannelement 7 ausgebildeten Ausstoßanschlag 46. Dies bedingt, dass das gesamte Spannelement 7 in Öffnungsrichtung OR relativ zum Träger 3 bewegt wird, wodurch wiederum das bewegbare Möbelteil 2 in eine, wenn auch noch geringfügige, Offenstellung OS gelangt. Gleichzeitig verschwenkt das Ausstoßelement 4 auch das Auslenkelement 38 im Uhrzeigersinn gegen die Kraft des Auslenkkraftspeichers 39.

In Fig. 7 hat sich der Ausstoßkraftspeicher 5 noch weiter entspannt, wodurch das Möbelteil 2 (repräsentiert durch das Koppelgegenstück 24) noch weiter in Offenstellung OS bewegt wurde. Das bewegbare Möbelteil 2 wird somit indirekt vom Ausstoßelement 4 über das Spannelement 7 und das Koppelstück 25 ausgestoßen. Da sich das Spannelement 7 in Öffnungsrichtung OR bewegt, beginnt sich auch der als Zugfeder ausgebildete Rückholkraftspeicher 15 zu spannen.

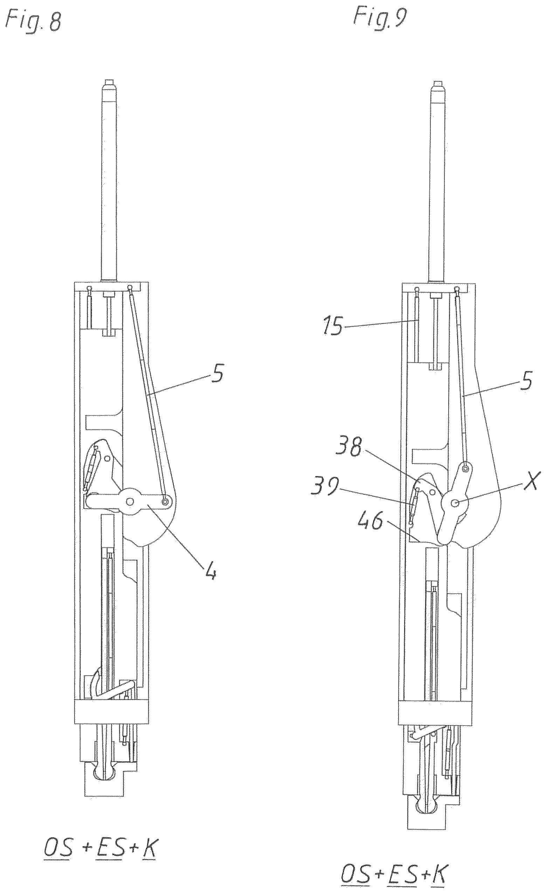

In Fig. 8 ist eine Vierteldrehung des Ausstoßelements 4 absolviert. Der Ausstoßkraftspeicher 5 hat sich bereits im Wesentlichen zur Hälfte entspannt. Das bewegbare Möbelteil 2 befindet sich in Offenstellung OS, die Verriegelungsvorrichtung 17 in Entriegelungs-Lage ES und die Koppelvorrichtung 26 in Koppelstellung K. Der Auslenkkraftspeicher 39 ist voll gespannt.

Da sich gemäß Fig. 9 das Ausstoßelement 4 bereits weiter bewegt hat, wird auch das von der Ausstoßelement-Kraftspeicherbasis 29 abgewandte Ende des Ausstoßelements 4 wieder entgegengesetzt (d. h. in diesem Fall nach rechts) bewegt. Dadurch kann sich auch der Auslenkkraftspeicher 39 wieder entspannen, wodurch das Auslenkelement 38 dem Ausstoßelement 4 nachgeführt wird.

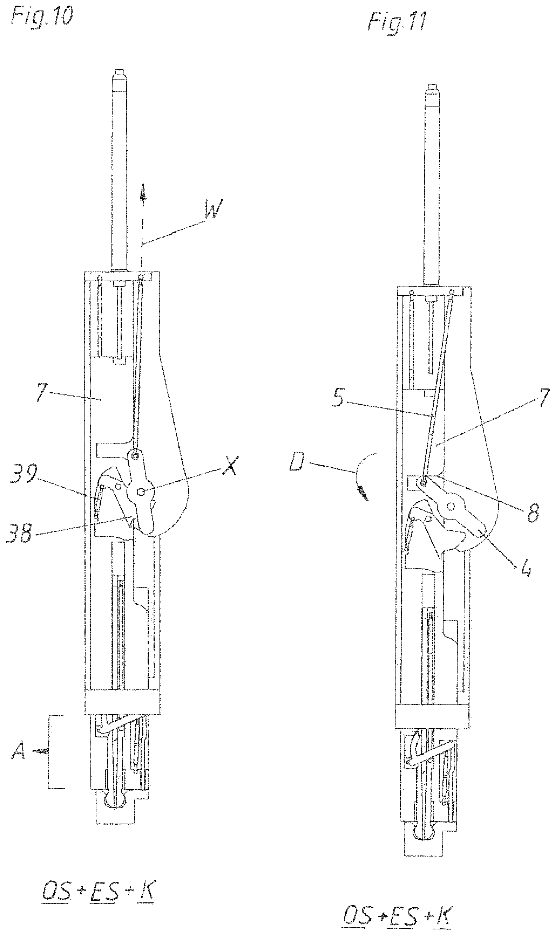

Zwischen Fig. 9 und Fig. 10 erreicht die Ausstoßvorrichtung 1 eine nicht dargestellte Lage, in welcher der der Verriegelungsstellung VS entgegengesetzte Totpunkt erreicht ist, in welcher die Träger-Kraftspeicherbasis 32, die Ausstoßelement-Kraftspeicherbasis 29 und die Drehachse X in Draufsicht in einer Linie liegen. Damit sich ausgehend von dieser neutralen Lage bzw. Totpunkt-Lage das Ausstoßelement 4 aber dennoch weiterbewegt, entspannt sich der Auslenkkraftspeicher 39 weiter, wodurch das Auslenkelement 38 das Ausstoßelement 4 in die Stellung gemäß Fig. 10 bewegt. In dieser Stellung ist der Ausstoßweg A der Ausstoßvorrichtung 1 vollendet. Ab dieser Stellung beginnt somit der Spannweg S, in welchem aktiv am bewegbaren Möbelteil 2 gezogen wird. Da das Spannelement 7 über die Koppelvorrichtung 26 mit dem bewegbaren Möbelteil 2 gekoppelt ist, wird auch das Ausstoßelement 4 gemäß Fig. 11 über das als Anschlag ausgebildete Bewegungsübertragungselement 8 in Öffnungsrichtung OR bewegt. Dadurch wird beim Spannen des Ausstoßkraftspeichers 5 das Ausstoßelement 4 in dieselbe Drehrichtung D (gegen den Uhrzeigersinn) wie beim Ausstoßen des bewegbaren Möbelteils 2 gedreht.

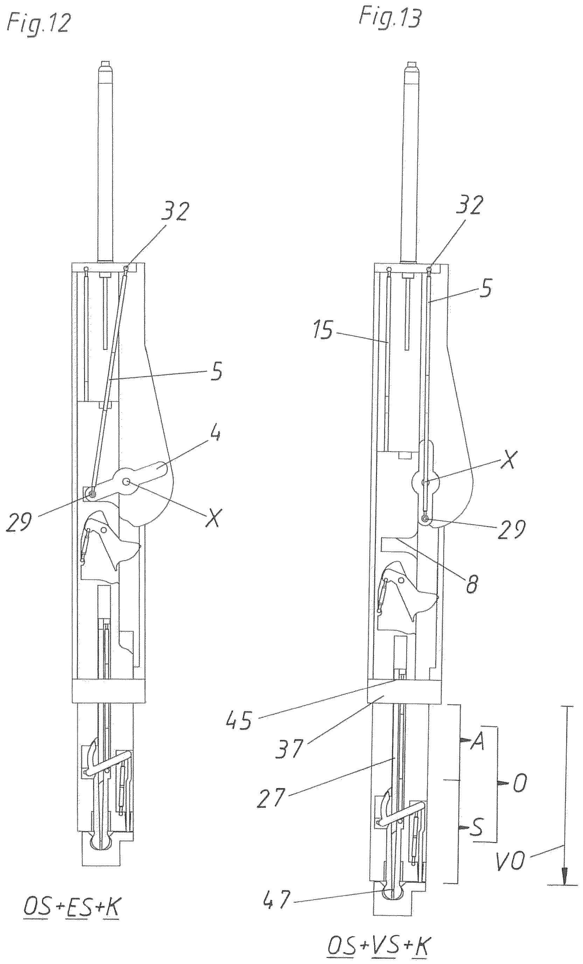

Gemäß Fig. 12 hat sich das Ausstoßelement 4 durch das Bewegungsübertragungselement 8 noch weiter in Drehrichtung D um die Drehachse X gedreht.

In Fig. 13 schließlich ist der Spannweg S der Spannvorrichtung 6 abgeschlossen. Mithin hat sich die Ausstoßvorrichtung 1 um den Öffnungsweg O (besteht aus Ausstoßweg A und Spannweg S) in Öffnungsrichtung OR bewegt. Gleichzeitig hat auch das Ausstoßelement 4 eine volle Umdrehung durchgeführt, wodurch wieder die Verriegelungsstellung VS erreicht ist, in welcher die Wirkungslinie W des Ausstoßkraftspeichers 5 durch die Drehachse 5 führt. Der Rückholkraftspeicher 15 ist voll gespannt. Der Anschlag 45 am Koppel- und Entkoppelelement 27 liegt am Kopfteil 37 an, wodurch der vorbestimmte Öffnungsweg VO für die durch das Koppel- und Entkoppelelement 27 gebildete Steuervorrichtung für die Koppelvorrichtung 26 erreicht bzw. zurückgelegt ist. Die Spitze 47 des Koppel- und Entkoppelements 27 befindet sich noch im vordersten Bereich des Koppelstücks 25, wodurch der Kopfbereich des Koppelstücks 25 noch gespreizt ist bzw. die beiden voneinander um einen Spalt beabstandeten Fortsätze des Kopfbereichs sich nicht zueinander verbiegen können. Die Koppelstellung K zwischen dem Kopfbereich des Koppelstücks 25 und dem Aufnahmebereich des Koppelgegenstücks 24 ist durch einen formschlüssigen Halt gegeben.

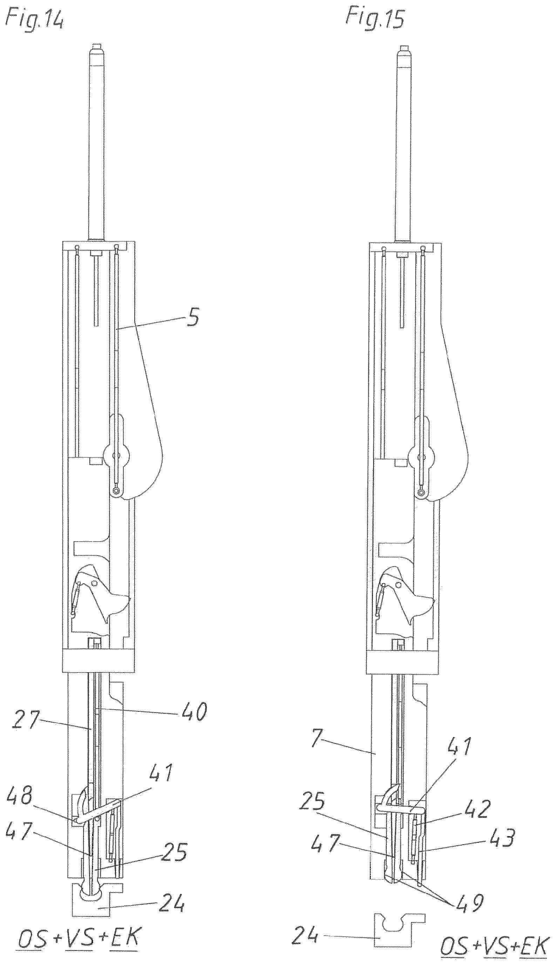

Wenn ausgehend von dieser Stellung gemäß Fig. 13 weiter am bewegbaren Möbelteil 2 gezogen wird, so erfolgt eine weggesteuerte Entkoppelung der Koppelvorrichtung 26 (siehe Fig. 14). Zunächst wird weiter über das Koppelstück 25 das Spannelement 7 in Öffnungsrichtung OR bewegt. Da aber das, eine Steuervorrichtung bildende Koppel- und Entkoppelelement 27 am Kopfteil 37 ansteht, bewegt sich nur das Koppelstück 25 samt Spannelement 7 in Öffnungsrichtung OR relativ zum Träger 3. Dadurch entfernt sich die Spitze 47 des Koppel- und Entkoppelelements 27 aus dem Kopfbereich des Koppelstücks 25, wodurch dieser Kopfbereich weniger stark bzw. nicht mehr gespreizt wird. Die Fortsätze des Kopfbereichs können sich somit zueinander verbiegen. Dadurch ist die Entkoppelstellung EK erreicht und es liegt nur mehr eine lose Verbindung zwischen dem Kopfbereich des Koppelstücks 25 und dem Aufnahmebereich des Koppelgegenstücks 24 vor. Somit kann sich das nicht mehr gespreizte Koppelstück 25 vom Koppelgegenstück 24 gemäß Fig. 14 bereits lösen. Bei der Relativbewegung des Koppel- und Entkoppelelements 27 zum Koppelstück 25 spannt sich auch der Koppelkraftspeicher 40, da dieser einerseits am Koppelstück 25 und andererseits am Koppel- und Entkoppelelement 27 angreift.

Sobald sich das Koppelgegenstück 24 komplett vom Koppelstück 25 gelöst hat, befindet sich das bewegbare Möbelteil 2 in einem Freilauf. Gleichzeitig kann sich auch der Koppelkraftspeicher 40 wieder entspannen, wodurch das Koppelstück 25 in Schließrichtung SR relativ zum Spannelement 7 bewegt wird. Dadurch verschwenkt sich auch der Koppelhebel 41 um das Drehlager 44. Mit dieser Bewegung wird auch der Koppelgegenstückanschlag 43 aus dem Spannelement 7 hinaus bewegt, indem sich der Koppelhebelkraftspeicher 42 entspannt. Beim Zurückfahren des Koppelstücks 25 gelangt der Kopfbereich dieses Koppelstücks 25 zwischen die Seitenwände der Koppelstückführung 49, wodurch die voneinander beabstandeten Teile des Kopfbereichs des Koppelstücks 25 zueinander gepresst werden. Dadurch kann die Spitze 47 des Koppel- und Entkoppelelements 27 nicht bis ganz nach vorne im Koppelstück 25 fahren. Der Koppelkraftspeicher 40 kann sich somit nicht zur Gänze, sondern nur in etwa zur Hälfte, entspannen.

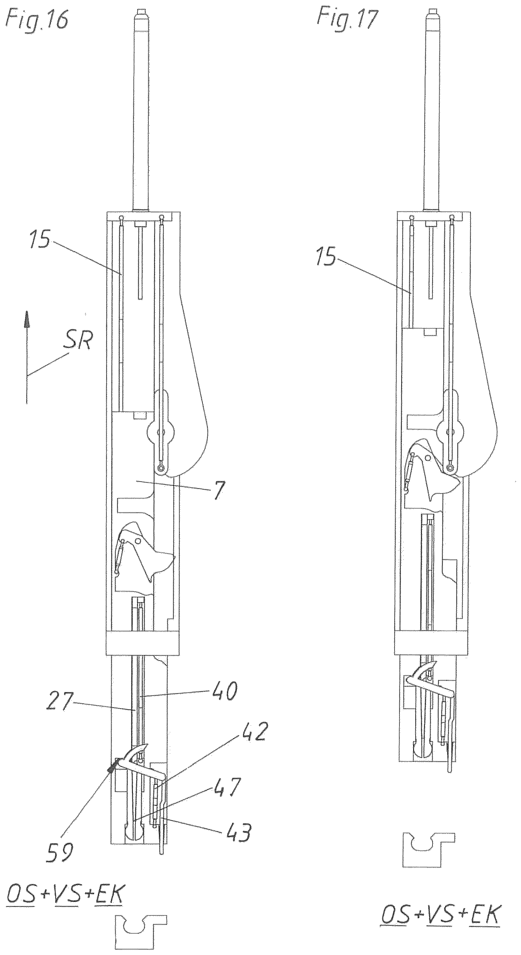

Um aber dennoch das Koppelstück 25 ganz in die Koppelstückführung 49 hinein zu fahren, entspannt sich gemäß Fig. 16 der Koppelhebelkraftspeicher 42 und verschwenkt den Koppelhebel 41 bis das Koppelstück 25 am Anschlag 59 des Spannelements 7 anliegt. Dadurch ist auch der Koppelgegenstückanschlag 43 voll ausgefahren. Die Spitze 47 des Koppel- und Entkoppelelements 27 befindet sich noch nicht komplett im vordersten Bereich des Koppelstücks 25.

Ab Fig. 16 bzw. bereits ab Fig. 15 beginnt sich auch der Rückholkraftspeicher 15 zu entspannen, wodurch zunächst die Position gemäß Fig. 17 erreicht wird.

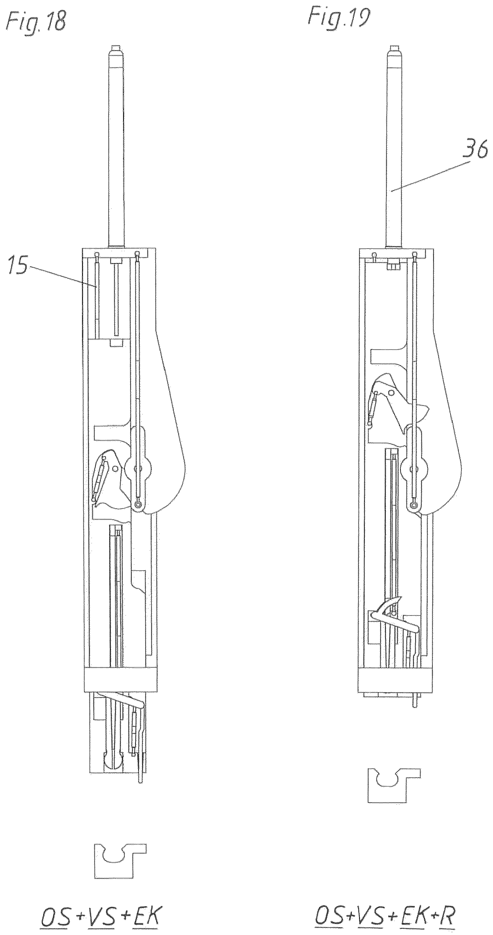

In weiterer Folge wird über den sich entspannenden Rückholkraftspeicher 15 das Spannelement 7 noch weiter bis in die Stellung gemäß Fig. 18 hineingefahren, bis schließlich in Fig. 19 die Rückholstellung R erreicht ist. Von Fig. 18 auf Fig. 19 wird diese Rückholbewegung durch die Dämpfvorrichtung 36 gedämpft. Das bewegbare Möbelteil 2 befindet sich immer noch in einer Offenstellung OS. Die Verriegelungsvorrichtung 17 befindet sich in Verriegelungsstellung VS.

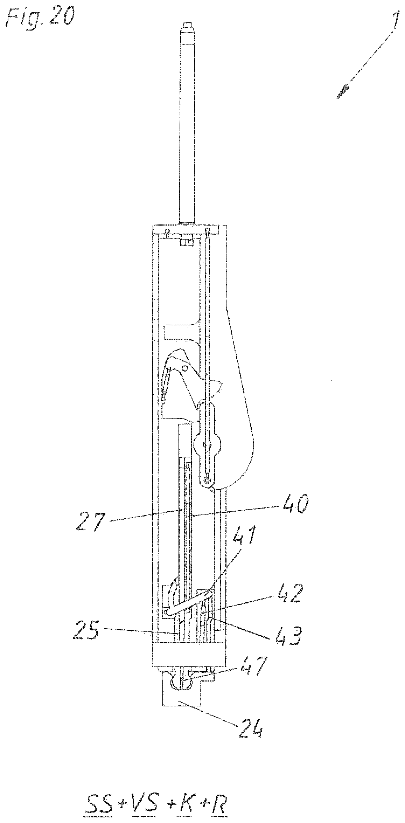

Wenn schließlich gemäß Fig. 20 auch noch das bewegbare Möbelteil 2 geschlossen wird, so gelangt zunächst das Koppelgegenstück 24 in Kontakt mit dem Koppelgegenstückanschlag 43. Dadurch wird zuerst das Koppelstück 25 über die Drehbewegung des Koppelhebels 41 in Öffnungsrichtung OR bewegt, wodurch der zunächst nicht gespreizte Kopfbereich des Koppelstücks 25 in den Aufnahmebereich des Koppelgegenstücks 24 eingreift. Da dann das Koppelstück 25 nicht mehr zwischen den Seitenflächen der Koppelstückführung 49 verengend gehalten ist, hat sich gemäß Fig. 20 auch der Koppelkraftspeicher 40 entspannt, wodurch die Spitze 47 des Koppel- und Entkoppelelements 27 wieder komplett in den Kopfbereich des Koppelstücks 25 eingedrungen ist und diesen Kopfbereich dadurch aufspreizt. Somit ist in Fig. 20 wieder die Koppelstellung K der Koppelvorrichtung 26 erreicht. Diese Fig. 20 entspricht auch wieder der Ausgangslage gemäß Fig. 4 .

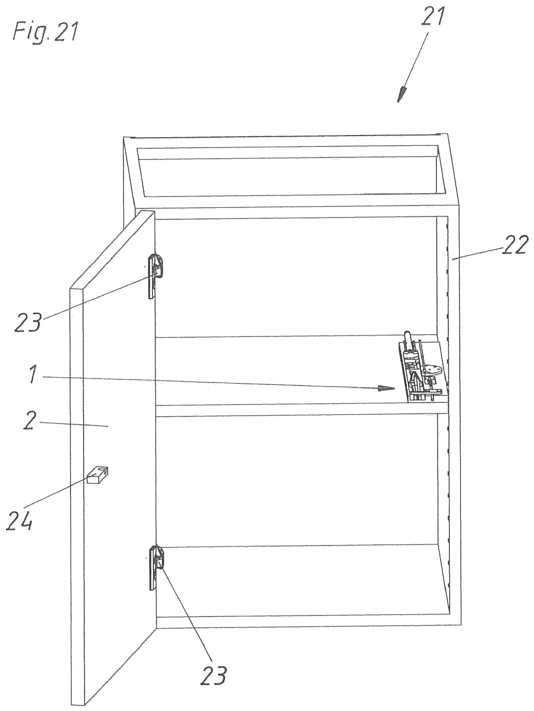

In Fig. 21 ist ein Möbel 21 samt einem Möbelkorpus 22 und einem bewegbaren Möbelteil 2 mit einem zweiten Ausführungsbeispiel einer Ausstoßvorrichtung 1 dargestellt. Auch hier ist das bewegbare Möbelteil 2 wiederum über Scharniere 23 mit dem Möbelkorpus 22 gelenkig verbunden. Am bewegbaren Möbelteil 2 ist das Koppelgegenstück 24 der Ausstoßvorrichtung 1 angebracht.

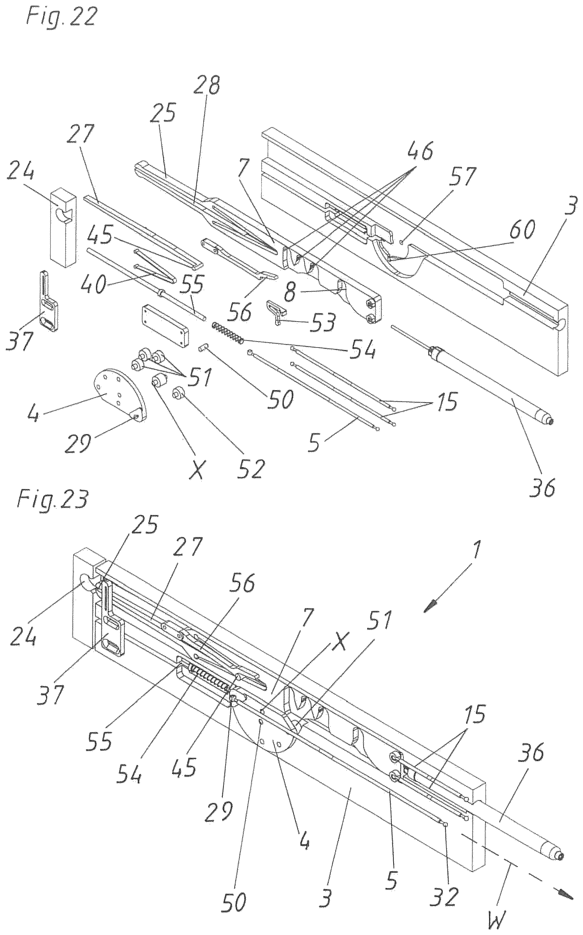

In der Explosionsdarstellung gemäß Fig. 22 ist das zweite Ausführungsbeispiel der Ausstoßvorrichtung 1 im Detail ersichtlich. Wiederum ist ein Träger 3 vorhanden, welcher zusammen mit einem nicht dargestellten Deckel ein Gehäuse für die restlichen Komponenten der Ausstoßvorrichtung 1 bilden kann. Im Träger 3 ist das Spannelement 7 verschiebbar gelagert. Dieses Spannelement 7 ist über die Dämpfvorrichtung 36 gedämpft bewegbar am Träger 3 gelagert. Über die Rückholkraftspeicher 15 ist das Spannelement 7 mit dem Träger 3 verbunden. Im Spannelement 7 ist eine Führungsbahn 28 für das Koppel- und Entkoppelelement 27 vorgesehen. Dieses Koppel- und Entkoppelelement 27 ist durch einen Koppelkraftspeicher 40 in Richtung links gegenüber dem Spannelement 7 vorgespannt. Der Koppelkraftspeicher 40 ist in diesem Fall als in etwa V-förmige Zugfeder ausgebildet, wobei diese Zugfeder mit ihren Enden im Spannelement 7 gehalten ist und in einem mittleren Bereich am Koppel- und Entkoppelelement 27 anliegt. Weiters ist ein mit dem Träger 3 verbundener Koppelelementspanner 56 vorgesehen, welcher am Anschlag 45 des Koppel- und Entkoppelelements 27 anlegbar ist. Zudem ist auch bei diesem Ausführungsbeispiel ein Kopfteil 37 am Träger 3 angebracht. Am Spannelement 7 sind insgesamt drei Ausstoßanschläge 46 vorgesehen, welche mit den am Ausstoßelement 4 angeordneten Ausstoßrollen 51 korrespondieren. Das Ausstoßelement 4 selbst ist über die Drehachse X am Drehlager 57 des Trägers 3 drehbar gelagert. Zudem ist am Ausstoßelement 4 die Spannrolle 52 angeordnet. Ein Exzenterbolzen 50 ist am Ausstoßelement 4 exzentrisch angeordnet. Der Ausstoßkraftspeicher 5 ist einerseits über die Ausstoßelement-Kraftspeicherbasis 29 mit dem Ausstoßelement 4 und andererseits über die Träger-Kraftspeicherbasis 32 mit dem Träger 3 verbunden. Weiters ist auch eine Auslösevorrichtung 35 vorgesehen, welche bei diesem Ausführungsbeispiel durch das Auslöseelement 55, die Auslösefeder 54 und den Auslösebügel 53 gebildet ist. Dieser Auslösebügel 53 ist in der Ausnehmung 60 des Trägers 3 gehalten.

In Fig. 23 ist das zweite Ausführungsbeispiel der Ausstoßvorrichtung 1 in zusammengebautem Zustand dargestellt. Dabei liegt der Anschlag 45 des Koppel- und Entkoppelelements 27 am Koppelelementspanner 56 an. Zudem ist ersichtlich, dass die Träger-Kraftspeicherbasis 32 und die Ausstoßelement-Kraftspeicherbasis 29 in der dargestellten Verriegelungsstellung VS in einer die Drehachse X des Ausstoßelements 4 und die Wirkungslinie W enthaltenden Ebene liegen.

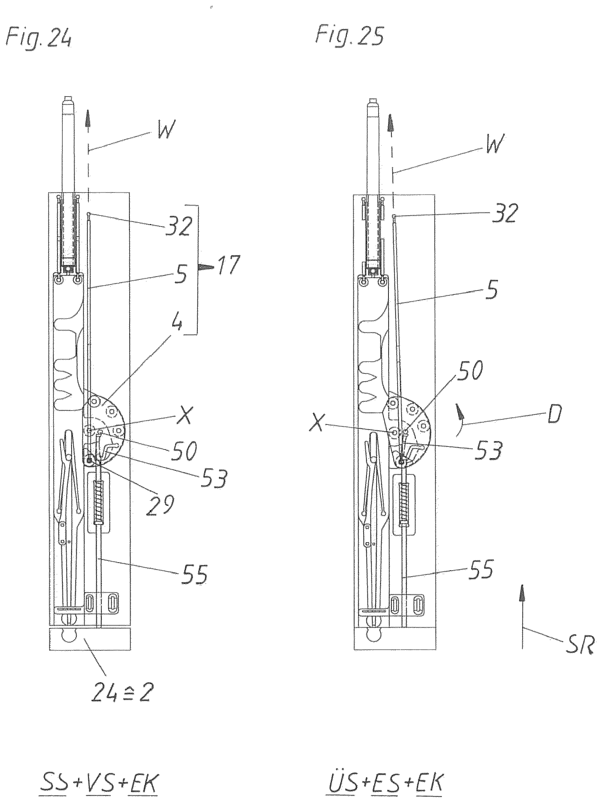

Eine zu Fig. 23 passende Draufsicht auf die Ausstoßvorrichtung 1 ist in Fig. 24 dargestellt. Die Stellung des Koppelgegenstücks 24 entspricht der Stellung des bewegbaren Möbelteils 2, welches sich in der Schließstellung SS befindet. Zudem befindet sich die Verriegelungsvorrichtung 17 in Verriegelungsstellung VS, da die Wirkungslinie W des Ausstoßkraftspeichers 5 durch die Drehachse X führt. Der Auslösebügel 53 liegt mit seiner Stirnseite am Exzenterbolzen 50 an. Am Kniebereich dieses Auslösebügels 53 wiederum liegt ein Endbereich des Auslöseelements 55 an. Das andere Ende dieses Auslöseelements 55 liegt am Koppelgegenstück 24 an. Der Kopfbereich des Koppelstücks 25 ist durch die Spitze 47 des Koppel- und Entkoppelelements 27 zwar gespreizt, da sich der Kopfbereich des Koppelstücks 25 aber nicht im Aufnahmebereich des Koppelgegenstücks 24 befindet, befindet sich die Koppelvorrichtung 26 noch in einer Entkoppelstellung EK.

Wenn nun ausgehend von dieser Schließstellung SS gemäß Fig. 24 in Schließrichtung SR auf das bewegbare Möbelteil 2 gedrückt wird, so gelangt das bewegbare Möbelteil 2 in die Überdrückstellung ÜS gemäß Fig. 25. Da das Auslöseelement 55 am Koppelgegenstück 24 anliegt und der nachgiebige Auslösebügel 53 über seinen Kniebereich wiederum am Auslöseelement 55 anliegt, wird die Stirnseite des Auslösebügels 53 auf den Exzenterbolzen 50 gedrückt, wodurch das Ausstoßelement 4 in Drehrichtung D um die Drehachse X gedreht wird. Dadurch gelangt die Drehachse X und die Wirkungslinie W in eine zueinander beabstandete, relative Entriegelungs-Lage ES. Somit ist die Verriegelungsvorrichtung 17 entriegelt. (In den hier dargestellten Ausführungsbeispielen wird für die Verriegelung immer die Ausstoßelement-Kraftspeicherbasis 29 bewegt. Prinzipiell wäre es aber auch möglich, dass beim Überdrücken die Drehachse X derart verschoben wird, dass sie in Abstand zur Wirkungslinie W gelangt. Dadurch bliebe die Wirkungslinie W in Bezug auf den Träger 3 unverändert, die Drehachse X würde sich aber relativ zum Träger 3 bewegen.)

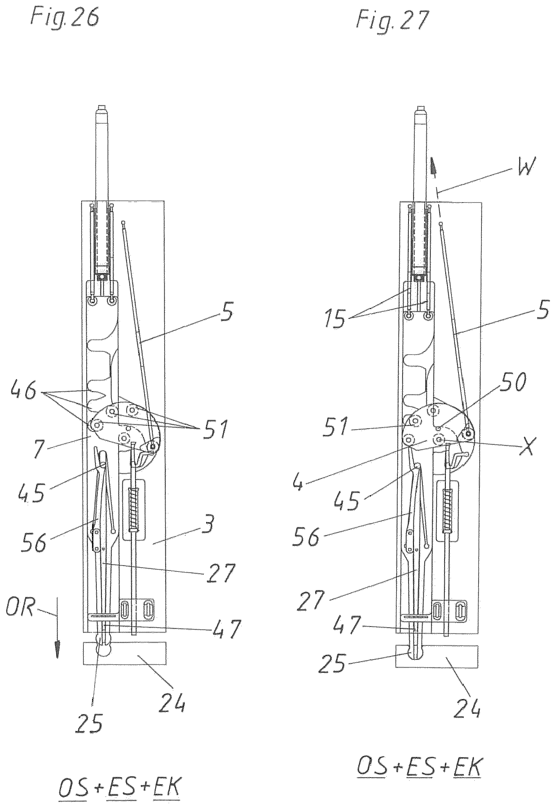

Sobald ein Bediener des Möbels 21 nicht mehr auf das bewegbare Möbelteil 2 drückt, beginnt sich gemäß Fig. 26 der Ausstoßkraftspeicher 5 weiter zu entspannen. Dieser Ausstoßkraftspeicher 5 nimmt das Ausstoßelement 4 mit und dreht dieses weiter in Drehrichtung D gegen den Uhrzeigersinn. Dadurch gelangt die erste der drei Ausstoßrollen 51 in Kontakt mit einem ersten der drei Ausstoßanschlägen 46, wodurch das Spannelement 7 vom Ausstoßelement 4 in Öffnungsrichtung OR bewegt wird. Da das Koppelstück 25 einstückig mit dem Spannelement 7 ausgebildet ist, wird über den Kopfbereich des Koppelstücks 25 auch das Koppelgegenstück 24 und mit diesem das bewegbare Möbelteil 2 in Öffnungsrichtung OR bewegt. Dadurch befindet sich das bewegbare Möbelteil 2 in einer - wenn auch geringfügig geöffneten - Offenstellung OS. Die Verriegelungsvorrichtung 17 befindet sich in einer Entriegelungs-Lage ES. Die Koppelvorrichtung 26 befindet sich immer noch in einer Entkoppelstellung EK. Gemäß Fig. 26 wurde das Spannelement 7 bereits leicht in Öffnungsrichtung OR relativ zum Träger 3 bewegt. Da aber der Koppelelementspanner 56 am Träger 3 befestigt ist und der Anschlag 45 an diesem Koppelementspanner 56 anliegt, bewegt sich das die Steuervorrichtung bildende Koppel- und Entkoppelelement 27 nicht mit dem Spannelement 7 in Öffnungsrichtung OR mit. Dadurch entfernt sich die Spitze 47 des Koppel- und Entkoppelements 27 aus dem Kopfbereich des Koppelstücks 25. Der Kopfbereich des Koppelstücks 25 wird dadurch bereits weniger gespreizt.

Da gemäß Fig. 27 die Spitze 47 noch weiter relativ zum Koppelstück 25 zurückgefahren ist, wird der Kopfbereich des Koppelstücks 25 nicht mehr gespreizt und dieser Kopfbereich kann aufgrund der zueinander verbiegbaren Ausbildung seiner beiden Fortsätze in den Aufnahmebereich im Koppelgegenstück 24 hineingleiten. Dadurch ist aber erst eine lose Verbindung zwischen Koppelstück 25 und Koppelgegenstück 24 erreicht. Durch die Relativbewegung des Koppel- und Entkoppelelements 27 zum Spannelement 7 entlang der Führungsbahn 28 ist gemäß Fig. 27 der Koppelkraftspeicher 40 gespannt. Gemäß Fig. 27 hat sich auch das Ausstoßelement 4 bereits weiter gedreht, wodurch eine zweite Ausstoßrolle 41 in Kontakt mit einem zweiten Ausstoßanschlag 46 gelangt.

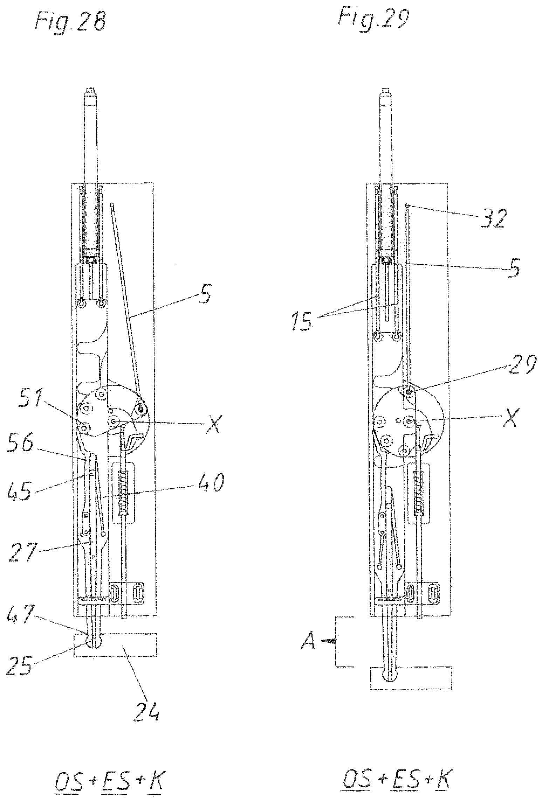

Bei weiterer Drehung des Ausstoßelements 4 gemäß Fig. 28 gelangt ein Ende des elastischen Koppelelementspanners 56 in Kontakt mit dem Ausstoßelement 4, wodurch der Koppelementspanner 56 leicht nach links verbogen wird. Dadurch wird der Anschlag 45 des Koppel- und Entkoppelelements 27 nicht mehr vom Koppelelementspanner 56 gehalten, wodurch sich der Koppelkraftspeicher 40 entspannen kann. Dadurch bewegt sich auch das Koppel- und Entkoppelelement 27 wieder relativ zum Spannelement 7 in Öffnungsrichtung OR, wodurch die Spitze 47 des Koppel- und Entkoppelements 27 in den Kopfbereich des Koppelstücks 25 gelangt und diesen spreizt. Dadurch ist ein sicherer formschlüssiger Halt und somit die Koppelstellung K zwischen dem Koppelstück 25 und dem Koppelgegenstück 24 erreicht, welche ohne eine Relativbewegung des Koppel- und Entkoppelelements 27 zum Koppelstück 25 unlösbar ist.

Gemäß Fig. 29 ist eine halbe Umdrehung des Ausstoßelements 4 abgeschlossen. Mithin hat sich der Ausstoßkraftspeicher 5 komplett entspannt und das Ausstoßelement 4 befindet sich wieder in einer neutralen Lage. Der Ausstoßweg A der Ausstoßvorrichtung 1 ist damit abgeschlossen. Die Rückholkraftspeicher 15 haben sich bereits in etwa zur Hälfte gespannt. Ab dieser Fig. 29 wird nun in Öffnungsrichtung OR am bewegbaren Möbelteil 2 gezogen.

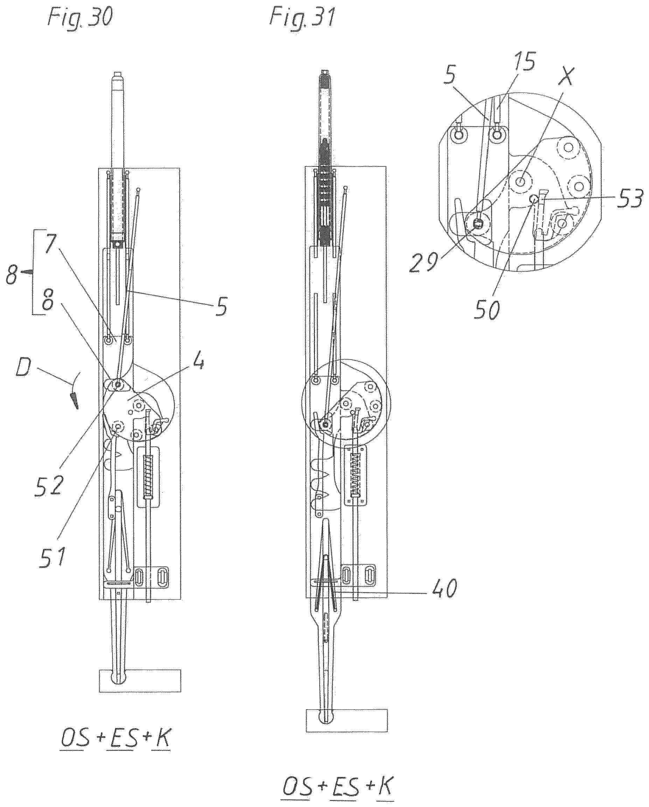

Durch diese weitere Ziehbewegung, die in Fig. 30 bereits begonnen hat, wird das Spannelement 7 weiter in Öffnungsrichtung OR relativ zum Träger 3 bewegt. Da sich eine dritte Ausstoßrolle 51 immer noch in Kontakt mit einem dritten Ausstoßanschlag 46 befindet, wird auch das Ausstoßelement 4 bei diesem Spannen des Ausstoßkraftspeichers 5 weiter in dieselbe Drehrichtung D wie beim Ausstoßen des bewegbaren Möbelteils 2 gedreht. Gleichzeitig kommt auch die Spannrolle 52 in Kontakt mit dem Bewegungsübertragungselement 8. Dieses als Anschlag ausgebildete Bewegungsübertragungselement 8 bildet zusammen mit dem Spannelement 7 die Spannvorrichtung 6 für den Ausstoßkraftspeicher 5. Dieser ist in Fig. 30 bereits wieder zu einem Teil gespannt.

Gemäß Fig. 31 wurde das bewegbare Möbelteil 2 noch weiter in Öffnungsrichtung OR bewegt und gleichzeitig das Ausstoßelement 4 weiter in Drehrichtung D gedreht, wodurch der Exzenterbolzen 50 an einer Flanke des Auslösebügels 53 anliegt und diesen Auslösebügel 53 aufgrund seiner Nachgiebigkeit bereits geringfügig nach rechts verbiegt, wie dies gut im rechts oben dargestellten Detailausschnitt erkennbar ist.

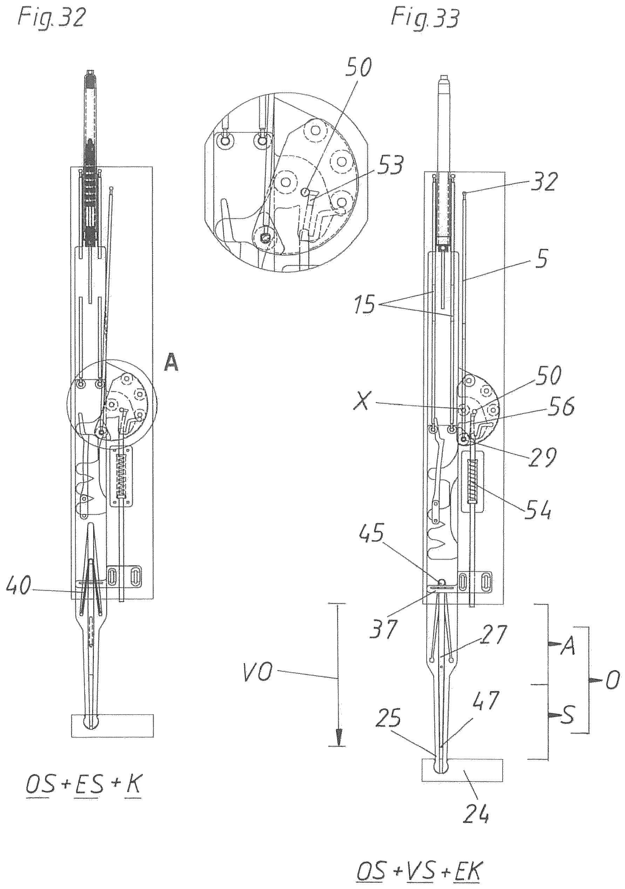

In Fig. 32 wurde das bewegbare Möbelteil 2 noch weiter in Öffnungsrichtung OR bewegt, wodurch sich das Ausstoßelement 4 noch weiter gedreht hat. Dadurch verbiegt der Exzenterbolzen 50 den Auslösebügel 53 noch deutlicher (siehe Detail rechts oben).

Bei weiterer Bewegung passiert der Exzenterbolzen 50 schließlich den Auslösebügel 53, wodurch beide Komponenten wieder in ihre Ausgangslage gemäß Fig. 33 gelangen. Durch die Auslösefeder 54 wird auch die Stellung des Auslöseelements 55 wieder so angepasst, dass das Auslöseelement 55 um das Spaltmaß aus dem Träger 3 vorsteht. Gemäß Fig. 33 ist auch der Spannweg S abgeschlossen, welcher zusammen mit dem Ausstoßweg A den Öffnungsweg O der Ausstoßvorrichtung 1 ergibt. Bei der Bewegung der Ausstoßvorrichtung 1 von Fig. 32 auf Fig. 33 gelangt der Anschlag 45 des Koppel- und Entkoppelelements 27 in Kontakt mit dem Kopfteil 37. Der vorbestimmte Öffnungsweg VO ist erreicht. Dadurch wird auch dieses Koppel- und Entkoppelelement 27 unter Ladung des Koppelkraftspeichers 40 relativ zum Spannelement 7 bewegt, wodurch die Spitze 47 des Koppel- und Entkoppelelements 27 aus dem Kopfbereich des Koppelstücks 25 gelangt und die Fortsätze dieses Kopfbereichs nicht mehr spreizt. Dadurch ist die Entkoppelstellung EK der Koppelvorrichtung 26 erreicht. Eine lose Verbindung zwischen dem Kopfbereich des Koppelstücks 25 und dem Aufnahmebereich des Koppelgegenstücks 26 liegt aber noch vor.

Wenn nun ausgehend von dieser Stellung gemäß Fig. 33 weiter am bewegbaren Möbelteil 2 gezogen wird, so kann sich das Koppelgegenstück 24 vom Koppelstück 25 durch zueinander Verbiegen der Fortsätze des Kopfbereichs lösen und auch die lose Verbindung ist aufgehoben.

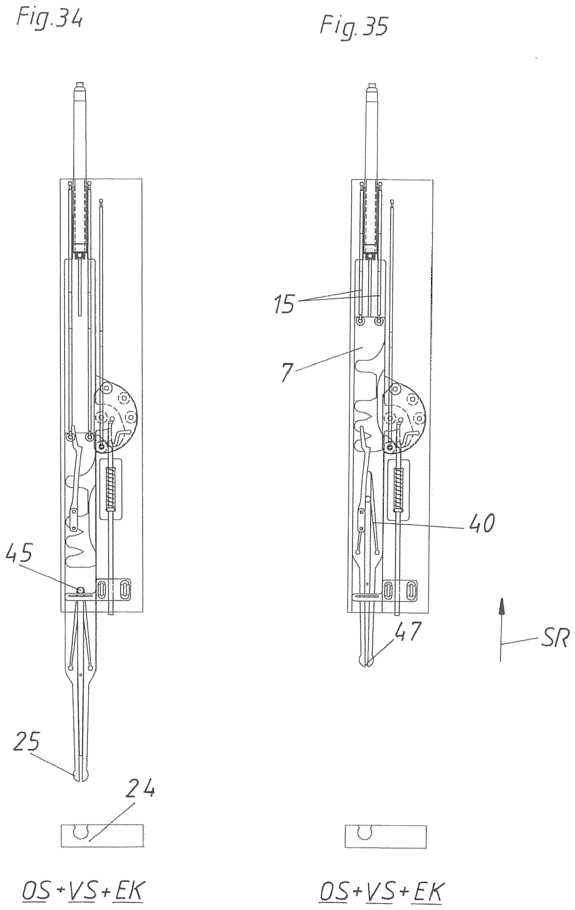

Ab Erreichen dieser Entkoppelstellung EK kann sich auch der Rückholkraftspeicher 15 wieder entspannen und bewegt zunächst das Spannelement 7 in Schließrichtung SR bis zum Erreichen der Stellung gemäß Fig. 35. Gleichzeitig mit dieser Bewegung bzw. ab dem Zeitpunkt, ab dem der Anschlag 45 nicht mehr am Kopfteil 37 anliegt, kann sich auch der Koppelkraftspeicher 40 entspannen. Dadurch wird die Spitze 47 des Koppel- und Entkoppelelements 27 in den Kopfbereich des Koppelstücks 25 bewegt, wodurch dieser wieder gespreizt wird.

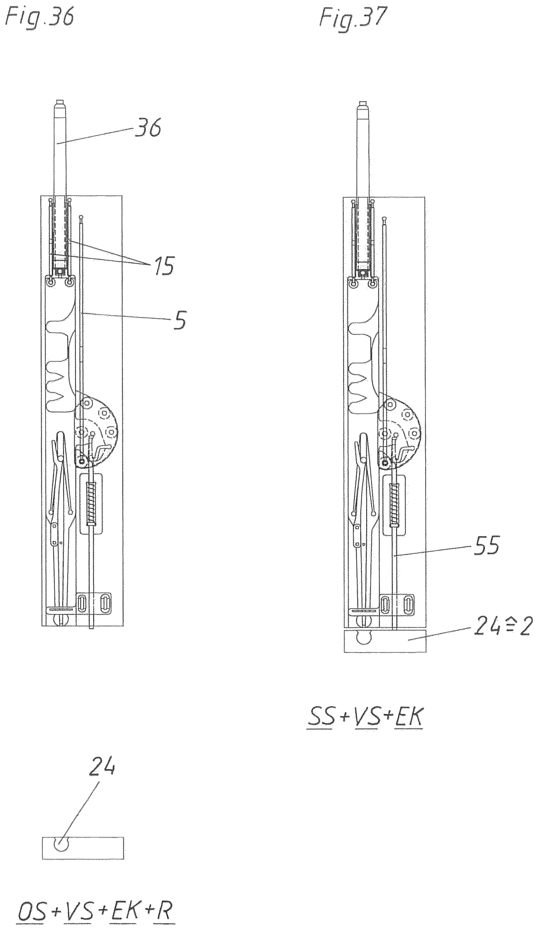

In Fig. 36 hat sich der Rückholkraftspeicher 15 zur Gänze entspannt. Diese Rückfahrbewegung wird über den Kolben der Dämpfvorrichtung 36 gedämpft. Dadurch ist die Rückholstellung R der Rückholvorrichtung 13 bzw. des Rückholkraftspeichers 15 erreicht. Das bewegbare Möbelteil 2 - repräsentiert durch das Koppelgegenstück 24 - befindet sich aber noch in Offenstellung OS.

Wenn schließlich gemäß Fig. 37 auch noch das bewegbare Möbelteil 2 in Schließrichtung SR bewegt wird, so gelangt das bewegbare Möbelteil 2 in die Schließstellung SS. In dieser Schließstellung SS liegt das Koppelgegenstück 24 wieder am Auslöseelement 55 an. Die Verriegelungsvorrichtung 17 befindet sich in der Verriegelungsstellung VS. Die Koppelvorrichtung 26 befindet sich in der Entkoppelstellung EK. Fig. 37 entspricht wieder der Ausgangslage gemäß Fig. 24.

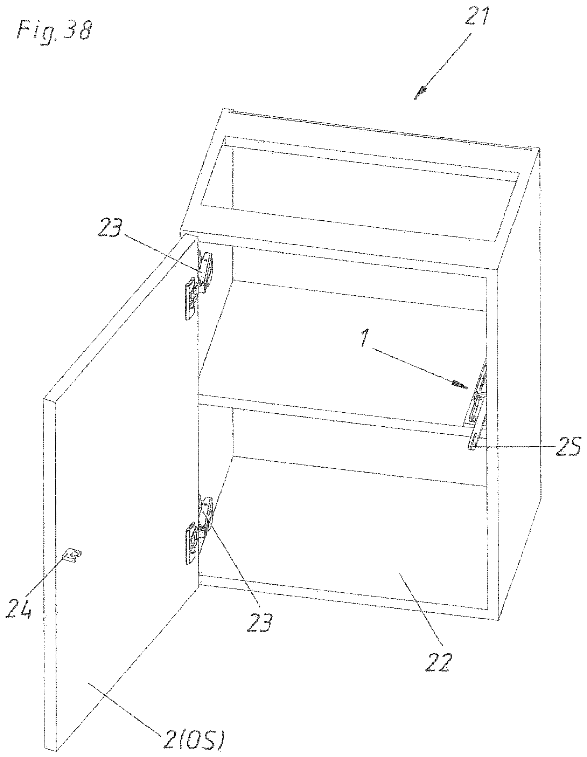

Fig. 38 zeigt ein Möbel 21 mit einem Möbelkorpus 22 und einem bewegbaren Möbelteil 2 in Form einer Möbeltüre. Das bewegbare Möbelteil 2 ist über zwei Scharniere 23 am Möbelkorpus schwenkbar gelagert. In eines dieser Scharniere 23 kann eine nicht dargestellte Einziehvorrichtung für das bewegbare Möbelteil 2 integriert sein. Am Möbelkorpus 22 ist eine Ausstoßvorrichtung 1 scharnierfern angeordnet. In diesem Fall ist ersichtlich, dass die Ausstoßvorrichtung 1 an seinem dem bewegbaren Möbelteil 2 zugewandten Ende ein Koppelstück 25 aufweist. Dieses Koppelstück 25 ist mit einem am bewegbaren Möbelteil angeordneten Koppelgegenstück 24 koppelbar. In dieser Fig. 38 befindet sich das bewegbare Möbelteil 2 in Offenstellung OS.

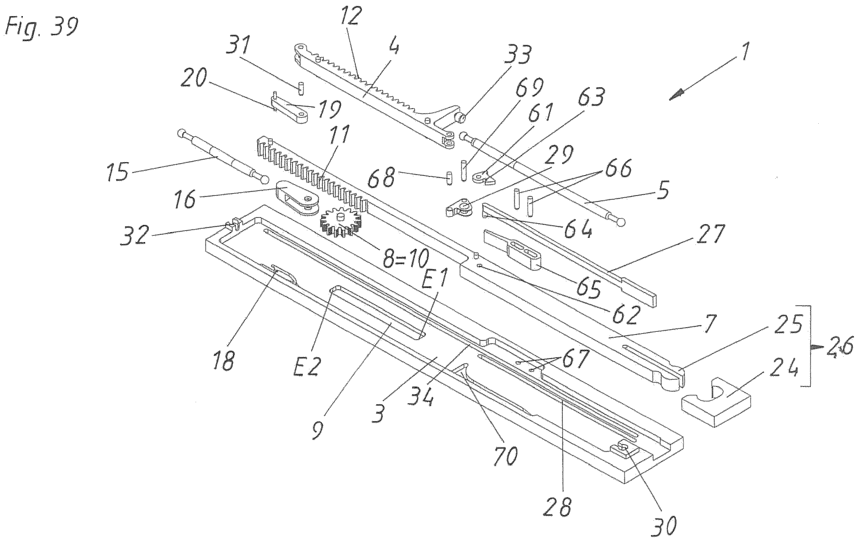

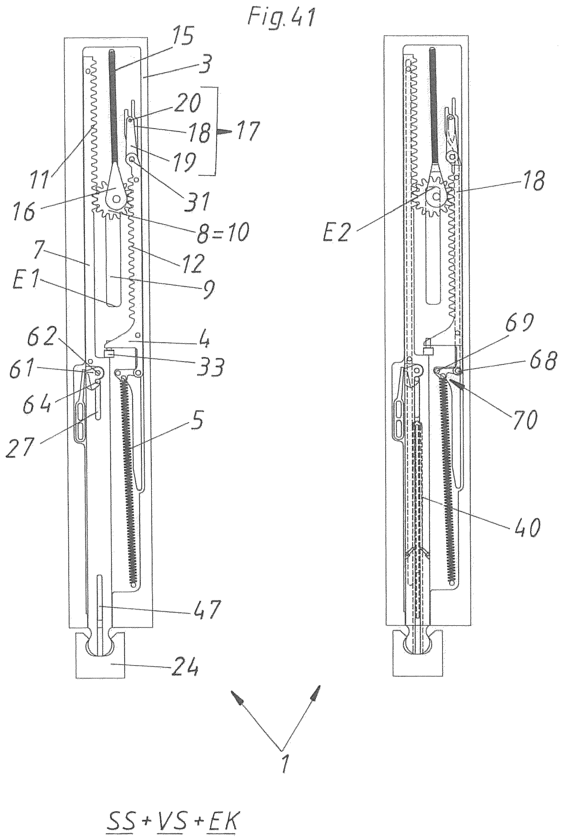

In Fig. 39 ist eine Explosionsdarstellung der Ausstoßvorrichtung 1 gezeigt. Als Basisteil weist diese Ausstoßvorrichtung 1 den Träger 3 auf. Dieser kann zusammen mit einer nicht dargestellten Abdeckung ein Gehäuse für die gesamten Komponenten der Ausstoßvorrichtung 1 bilden. Im Träger 3 ist eine Kulissenbahn 18 für das Ausstoßelement 4 ausgebildet. Am Ausstoßelement 4 ist über das Steuerhebeldrehlager 31 der Steuerhebel 19 drehbar gelagert. An diesem Steuerhebel 19 ist wiederum der Steuerzapfen 20 angeordnet, der in die herzkurvenförmige Kulissenbahn 18 eingreift. Zusätzlich ist im Träger 3 eine Führungsbahn 34 für das Spannelement 7 ausgebildet. Am vorderen Ende dieses Spannelements 7 ist das Koppelstück 25 angeordnet, welches zusammen mit dem Koppelgegenstück 24 die Koppelvorrichtung 26 bildet. Zusätzlich ist für die Koppelung und Entkoppelung das Koppel- und Entkoppelelement 27 mit dem Koppelkraftspeicher 40 vorgesehen. Dieser als in etwa V-förmig angeordnete Zugfeder ausgebildete Koppelkraftspeicher 40 ist in Fig. 39 nicht eingezeichnet, aber ab Fig. 41 ersichtlich. Im Träger 3 ist die Führungsbahn 28 für das Koppel- und Entkoppelelement 27 ausgebildet. Weiters ist ein Riegel 61 für das Koppel- und Entkoppelelement 27 vorgesehen, welcher im Lager 62 drehbar gelagert ist und eine Aufnahmemulde 63 für den am Koppel- und Entkoppelelement 27 ausgebildeten Fortsatz 64 aufweist. Der Riegelanschlag 65 ist über die Bolzen 66 in den Ausnehmungen 67 im Träger 3 gehalten.

Der Ausstoßkraftspeicher 5 ist über die Federbasis 29 einerseits mit dem Ausstoßelement 4 verbunden und greift andererseits an der im Träger 3 ausgebildeten Federbasis 30 an. Die Federbasis 29 ist über den Bolzen 68 mit dem Ausstoßelement 4 gelenkig verbunden. Zudem ist in der Federbasis 29 in weiterer Steuerbolzen 69 gehalten, welcher eine gezielte Führung der Federbasis 29 im Bereich 70 der Kulissenbahn 18 ermöglicht. Am Ausstoßelement 4 ist auch eine Zahnstange 12 ausgebildet. Das Spannelement 7 ist mit dem Bewegungsübertragungselement 8 bewegbar gekoppelt. Im Speziellen ist dieses Bewegungsübertragungselement 8 als Zahnrad 10 ausgebildet, welches mit der Zahnstange 11 des Spannelements 7 und der Zahnstange 12 des Ausstoßelements 4 kämmt. Das Bewegungsübertragungselement 8 ist einerseits in der im Träger 3 ausgebildeten Führungsbahn 9 verschiebbar gelagert und andererseits im Schlitten 16 drehbar gelagert. Die Führungsbahn 9 weist zwei Endanschläge E1 und E2 auf. Der Schlitten 16 wiederum ist Teil der Rückholvorrichtung 13 für das Spannelement 7. Im Speziellen greift an diesem Schlitten 16 der Rückholkraftspeicher 15 an. Zudem ist dieser Rückholkraftspeicher 15 am anderen Ende an der im Träger 3 ausgebildeten Federbasis 32 befestigt.

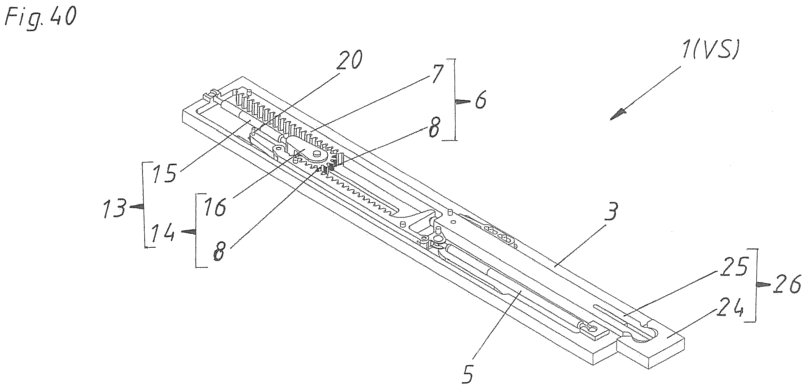

In Fig. 40 ist die Ausstoßvorrichtung 1 in zusammengebautem Zustand dargestellt. Das Koppelstück 25 ist dabei mit dem Koppelgegenstück 24 in einer losen Verbindung. Zudem ist ersichtlich, dass das Spannelement 7 gemeinsam mit dem Bewegungsübertragungselement 8 die Spannvorrichtung 6 bildet. Zusätzlich bildet dieses Bewegungsübertragungselement 8 gleichzeitig mit dem Schlitten 16 das Rückholelement 14. Dieses Rückholelement 14 bildet zusammen mit dem Rückholkraftspeicher 15 wiederum die Rückholvorrichtung 13. In dieser Fig. 40 ist der Rückholkraftspeicher 15 - der in diesem Fall als Feder, insbesondere als Zugfeder, ausgebildet ist - in entspannter Stellung. Demgegenüber befindet sich der Ausstoßkraftspeicher 5, welcher ebenso als Feder, insbesondere als Zugfeder, ausgebildet ist, in gespannter Stellung. Der Steuerzapfen 20 der Verriegelungsvorrichtung 17 befindet sich in der Rastmulde der herzkurvenförmigen Kulissenbahn 18, wodurch sich die gesamte Ausstoßvorrichtung 1 in Verriegelungsstellung VS befindet.

In den Fig. 41 bis 49 ist jeweils linksseitig eine Draufsicht auf die Ausstoßvorrichtung 1 in verschiedenen Stellungen dargestellt. Rechtsseitig ist jeweils dieselbe Draufsicht dargestellt, wobei aber auch die eigentlich nicht ersichtlichen, jeweils darunter liegenden Komponenten durch Strichlierung angedeutet sind.

In Fig. 41 befindet sich die Ausstoßvorrichtung 1 in derselben Stellung wie in Fig. 40, nämlich in der Verriegelungsstellung VS. Zusätzlich befindet sich das hier nicht dargestellte bewegbare Möbelteil 2 in der Schließstellung SS. Diese Schließstellung SS wird durch das Koppelgegenstück 24 repräsentiert, welches ja am bewegbaren Möbelteil 2 befestigt ist. In dieser Verriegelungsstellung VS liegt das Spannelement 7 über das Pufferelement 33 am Ausstoßelement 4 an. Der am Steuerhebel 19 angeordnete Steuerzapfen 20 befindet sich in der Rastmulde der herzkurvenförmigen Kulissenbahn 18 der Verriegelungsvorrichtung 17. Der Ausstoßkraftspeicher 5 ist gespannt, während der Rückholkraftspeicher 15 entspannt ist. Der Riegel 61 umgreift über seine Aufnahmemulde 63 den Fortsatz 64, wodurch sich das Koppel- und Entkoppelelement 27 mit seiner Spitze 47 in einer zum Kopfbereich des Koppelstücks 25 zurückgezogenen Position befindet. In dieser Position ist der Koppelkraftspeicher 40 gespannt. Der Koppelkraftspeicher 40 ist mit seinen beiden Enden im Spannelement 7 gehalten und liegt in einem mittleren Bereich am Koppel- und Entkoppelelement 27 an. Die Koppelvorrichtung 26 befindet in der Entkoppelstellung EK, in welcher das Koppelstück 25 und das Koppelgegenstück 24 lose miteinander verbunden sind.

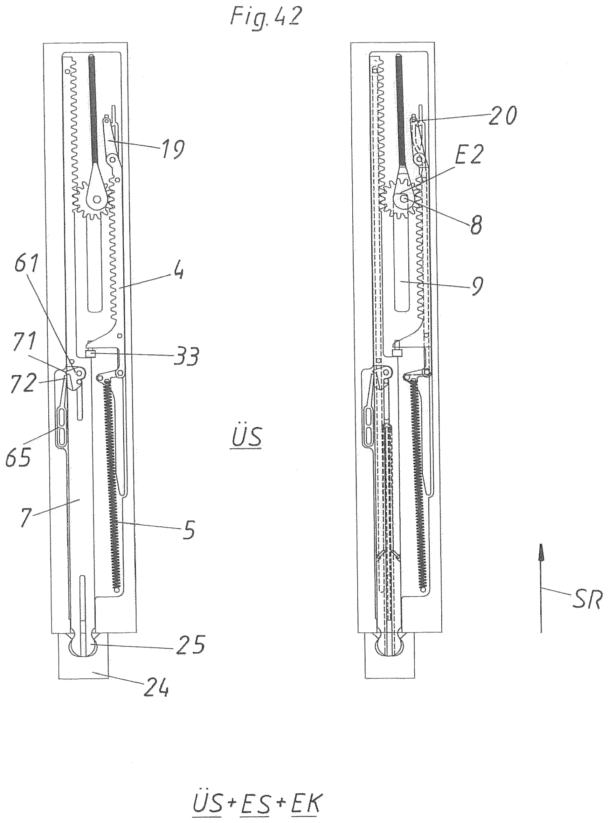

Wenn ausgehend von dieser Schließstellung SS gemäß Fig. 41 in Schließrichtung SR auf das bewegbare Möbelteil 2 gedrückt wird, so gelangt die Ausstoßvorrichtung 1 in die Überdrückstellung ÜS gemäß Fig. 42. Über das Koppelgegenstück 24 und das Koppelstück 25 wird durch diese Überdrückbewegung das Spannelement 7 in Schließrichtung SR bewegt. Über das Pufferelement 23 wird auch das Ausstoßelement 4 gegen die Kraft des Ausstoßkraftspeichers 5 in Schließrichtung SR bewegt, wodurch der Steuerhebel 19 und vor allem dessen Steuerzapfen 20 aus der Rastmulde der herzkurvenförmigen Kulissenbahn 18 über eine entsprechende Abweichschräge in einen Ausstoßabschnitt der Kulissenbahn 18 gelangt. Dadurch ist das Ausstoßelement 4 nicht mehr über die Verriegelungsvorrichtung 17 am Träger 3 verriegelt sondern befindet sich in einer Entriegelungs-Lage ES. Rechtsseitig ist auch erkennbar, dass mit dieser Überdrückbewegung auch das Bewegungsübertragungselement 8 bis an den Endanschlag E2 der Führungsbahn 9 bewegt wurde. Mit dieser Überdrückbewegung wurde auch der Riege 61 relativ zum Riegelanschlag 65 bewegt, wobei der Fortsatz 71 des Riegels 61 sich am - bei seitlicher Beaufschlagungsrichtung - nachgiebigen Ende 72 des Riegelanschlags 65 vorbeibewegt hat.

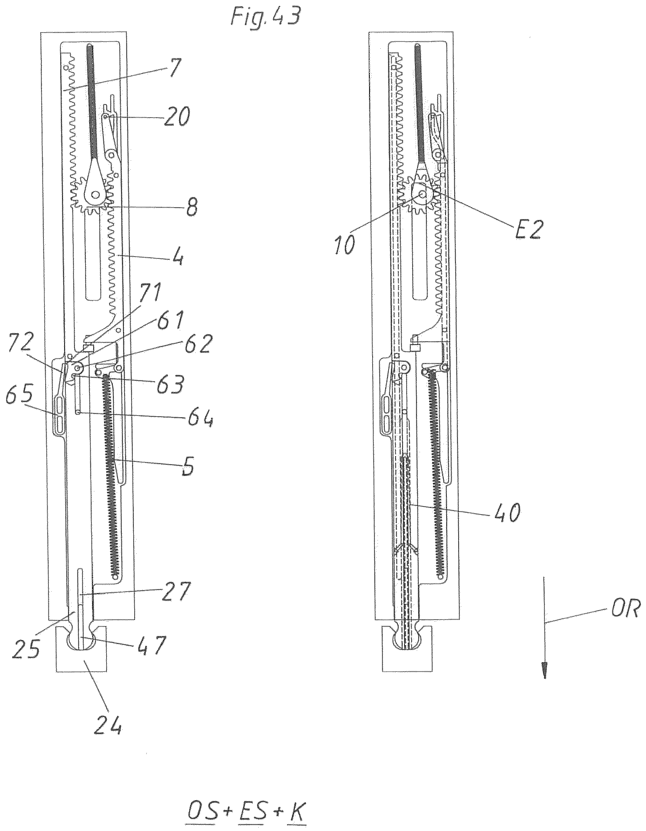

Sobald ein Benutzer ausgehend von der Stellung gemäß Fig. 42 das bewegbare Möbelteil 2 loslässt, kann sich der Ausstoßkraftspeicher 5 entspannen. Dadurch gelangt die Ausstoßvorrichtung 1 zunächst in die Stellung gemäß Fig. 43, welche einer geringfügigen Offenstellung OS des bewegbaren Möbelteils 2 entspricht. Es ist erkennbar, dass sich der Steuerzapfen 20 in seiner Entriegelungs-Lage ES bereits etwas in Öffnungsrichtung OR durch den Ausstoßabschnitt der Kulissenbahn 18 bewegt hat. Da der Ausstoßkraftspeicher 5 am Ausstoßelement 4 zieht, bewegt sich auch dieses Ausstoßelement 4 in Öffnungsrichtung OR relativ zum Träger 3. Da zudem das Ausstoßelement 4 über das Pufferelement 33 am Spannelement 7 anliegt, bewegt sich auch dieses Spannelement 7 in Öffnungsrichtung OR. Da darüber hinaus das Bewegungsübertragungselement 8 verschiebbar in der Führungsbahn 9 gelagert ist, werden das Ausstoßelement 4, das Bewegungsübertragungselement 8 und das Spannelement 7 über diesen ersten Teil des Ausstoßweges A gemeinsam relativ zum Träger 3 bewegt. Durch diese Bewegung des Spannelements 7 in Öffnungsrichtung OR wird auch der daran angeordnete Riegel 61 mitgenommen, wodurch der Fortsatz 71 am - bei dieser stirnseitigen Baufschlagungsrichtung - starren Ende 72 der Riegelanschlags 65 anliegt. Dadurch wird eine Drehbewegung des Riegels 61 um das Lager 62 im Uhrzeigersinn initiiert. Der Fortsatz 64 ist dadurch nicht mehr in der Aufnahmemulde 63 des Riegels 61 gehalten. Dadurch hat sich gemäß Fig. 43 der Koppelkraftspeicher 40 bereits entspannt und das Koppel- und Entkoppelelement 27 mitsamt seiner Spitze 47 in den Kopfbereich des Koppelstücks 25 bewegt. Dadurch können sich die voneinander beabstandeten Fortsätze des Kopfbereichs nicht mehr zueinander verbiegen und die Koppelstellung K der Koppelvorrichtung 26 in Form eines formschlüssigen Halts zwischen Koppelstück 25 und Koppelgegenstück 24 ist erreicht.

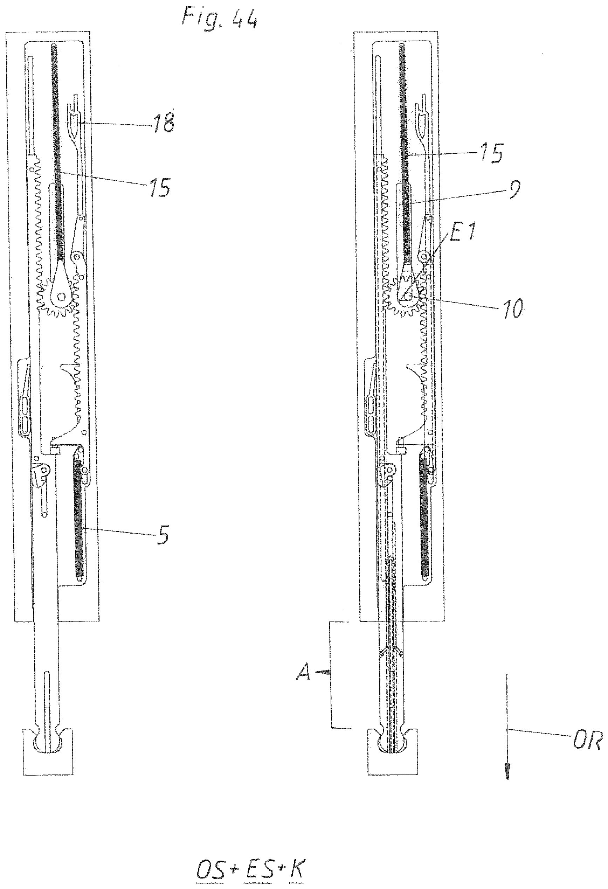

In Fig. 44 hat die Ausstoßvorrichtung 1 den Ausstoßweg A bereits zurückgelegt. Der Ausstoßkraftspeicher 5 hat sich entspannt. Das Bewegungsübertragungselement 8 in Form des Zahnrads 10 liegt am Endanschlag E1 der Führungsbahn 9 an. Mit dieser Ausstoßbewegung des Ausstoßelements 4 und der Mitbewegung des Bewegungsübertragungselements 8 wurde auch der Rückholkraftspeicher 15 gespannt.

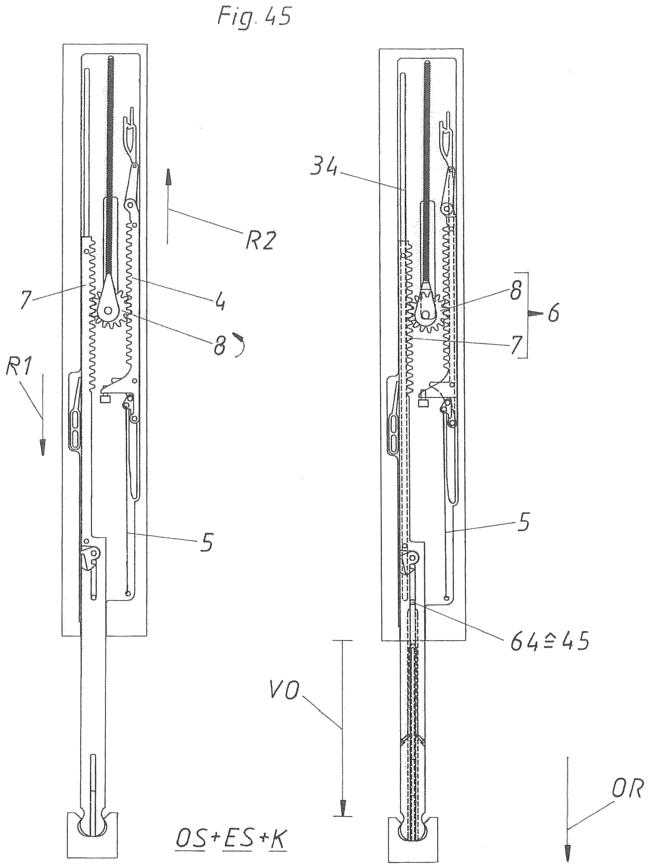

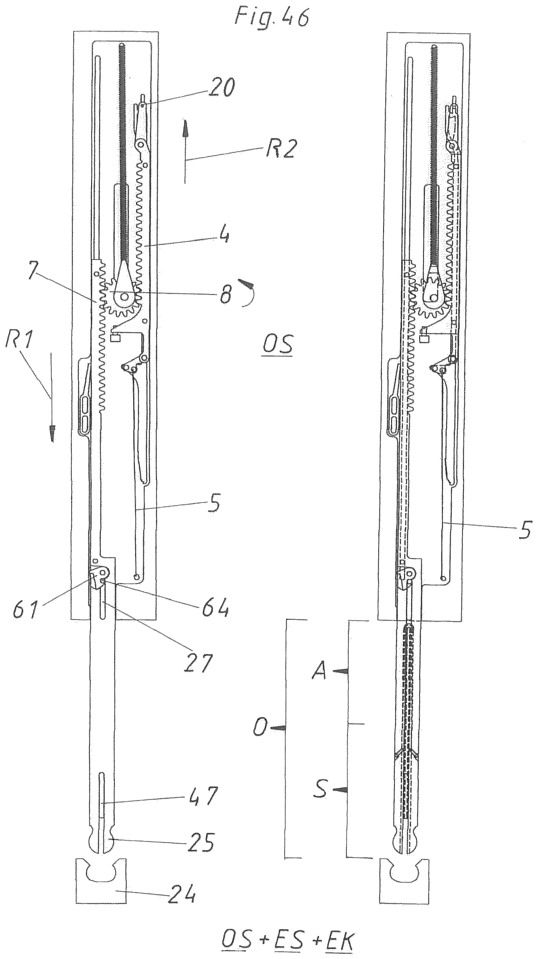

Da sich ab der Offenstellung OS gemäß Fig. 44 das Bewegungsübertragungselement 8 aufgrund des Anschlagens des Bewegungsübertragungselements 8 am Endanschlag E1 der Führungsbahn 9 nicht mehr in Öffnungsrichtung OR mit dem Spannelement 7 mitbewegen kann, kommt es durch weiteres Ziehen am bewegbaren Möbelteil 2 in Öffnungsrichtung OR gemäß Fig. 45 zu einer Relativbewegung zwischen dem Spannelement 7 und dem Bewegungsübertragungselement 8. Im Konkreten bewegt sich das Spannelement 7 weiter in die Richtung R1, wodurch sich das Bewegungsübertragungselement 8 gegen den Uhrzeigersinn dreht. Durch diese Drehung des Bewegungsübertragungselements 8 wird das Ausstoßelement 4 über die Zahnstange 12 in die entgegengesetzte Richtung R2 bewegt. Dadurch wird auch der Ausstoßkraftspeicher 5 wieder gespannt. Somit bildet das Spannelement 7 gemeinsam mit dem Bewegungsübertragungselement 8 die Spannvorrichtung 6 für den Ausstoßkraftspeicher 5. Dieser Ausstoßkraftspeicher 5 ist in Fig. 45 und auch in den Fig. 46, 47 und 50 (teilweise) rein schematisch als durchgehende Linie dargestellt, um die Länge zu veranschaulichen. In Fig. 45 liegt der Fortsatz 64, welcher gleichzeitig einen Anschlag 45 für das Koppel- und Entkoppelelement 27 bildet, am Träger 3 an. Dadurch ist der vorbestimmte Öffnungsweg VO erreicht. Wenn nun weiter in Öffnungsrichtung OR am bewegbaren Möbelteil 2 gezogen wird, kann sich das Koppel- und Entkoppelelement 27 nicht mit dem das Koppelstück 25 mitbildende Spannelement 7 mitbewegen.

Gemäß Fig. 46 hat sich diese Spannbewegung über das Spannelement 7 soweit fortgesetzt, dass sich die Spitze 47 des Koppel- und Entkoppelelements 27 aus dem Kopfbereich des Koppelstücks 25 komplett zurückgezogen hat, wodurch die Koppelvorrichtung 26 entkoppelt (Entkoppelstellung EK), sodass das Koppelgegenstück 24 und mithin das bewegbare Möbelteil 2 nicht mehr mit der Ausstoßvorrichtung 1 gekoppelt ist. Der Fortsatz 64 ist wieder in der Aufnahmemulde 63 des Riegels 61 gehalten. Der Koppelkraftspeicher 40 ist wieder geladen. Durch diese Spannbewegung hat sich auch der Steuerhebel 20 wieder in eine Position in der Kulissenbahn 20 bewegt, welche hinter der Rastmulde liegt. In Fig. 46 ist von der Ausstoßvorrichtung 1 auch der gesamte Öffnungsweg O zurückgelegt worden, welcher sich aus dem Ausstoßweg A und dem anschließenden Spannweg S zusammensetzt. Gemäß Fig. 46 kann nun das bewegbare Möbelteil 2 frei bewegt werden.

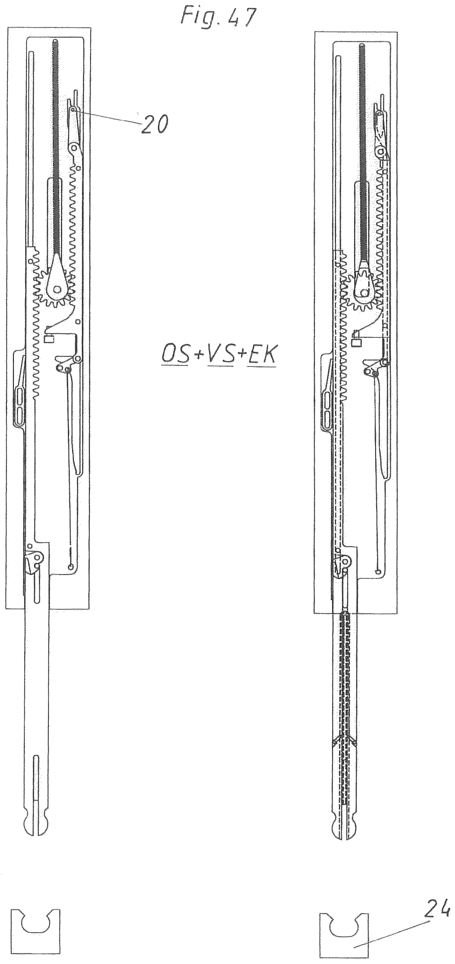

Da nun keine Kräfte mehr vom bewegbaren Möbelteil 2 auf die Ausstoßvorrichtung 1 wirken (d. h. es wird nicht mehr aktiv am Spannelement 7 und somit am Ausstoßelement 4 gezogen) kann sich der Ausstoßkraftspeicher 5 wieder kurz und leicht entspannen, bis sich gemäß Fig. 47 der Steuerzapfen 20 in der Rastmulde der herzkurvenförmigen Kulissenbahn 18 verriegelt. Dadurch ist wieder die Verriegelungsstellung VS der Verriegelungsvorrichtung 17 bzw. des Ausstoßelements 4 erreicht.

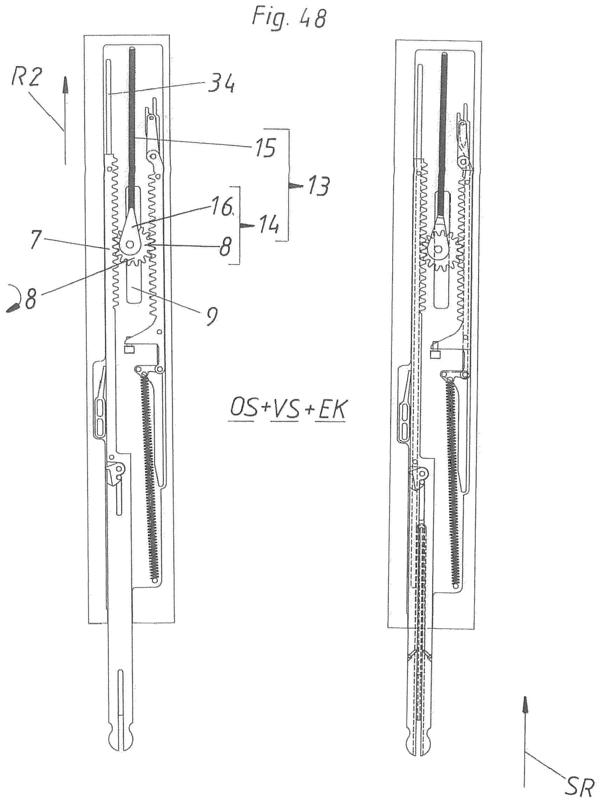

Sodann beginnt sich gemäß Fig. 48 der Rückholkraftspeicher 15 zu entspannen. Da dieser Rückholkraftspeicher 15 am Schlitten 16 des Rückholelements 14 zieht, das Ausstoßelement 4 aber aufgrund der Verriegelung der Verriegelungsvorrichtung 17 feststeht, beginnt sich das Bewegungsübertragungselement 8 in Form des Zahnrads 10 einerseits in der Führungsbahn 9 in Richtung R2 zu verschieben und andererseits im Schlitten 16 im Uhrzeigersinn zu drehen. Durch diese Drehung des Übertragungselements 8 wird auch das Spannelement 7 - in diesem Fall doppelt so schnell wie das Bewegungsübertragungselement 8 - in Richtung R2 bewegt. Das bewegbare Möbelteil 2 befindet sich immer noch in der Offenstellung OS, während sich die Ausstoßvorrichtung 1 bereits in der Verriegelungsstellung VS der Verriegelungsvorrichtung 17 befindet.

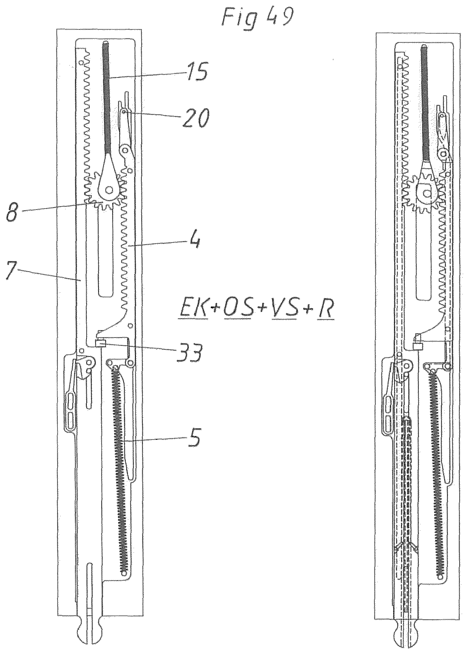

In Fig. 49 hat sich der Rückholkraftspeicher 15 komplett entspannt, wodurch das Spannelement 7 wieder am Ausstoßelement 4 anliegt. Dabei wird das Anschlagen des Spannelements 7 am Ausstoßelement 4 über das Pufferelement 33 gedämpft. Von der Rückholvorrichtung 13 ist dadurch das Spannelement 7 in die Rückholstellung R bewegt worden. Im Gegensatz zur Fig. 41 befindet sich in Fig. 49 das bewegbare Möbelteil 2 noch in der Offenstellung OS. Wenn von dieser Offenstellung OS händisch das bewegbare Möbelteil 2 wieder geschlossen wird, so gelangt im letzten Schließabschnitt das Koppelgegenstück 24 wieder mit dem Koppelstück 25 in eine lose Verbindung, wodurch wieder die Stellung gemäß Fig. 41 erreicht wäre.

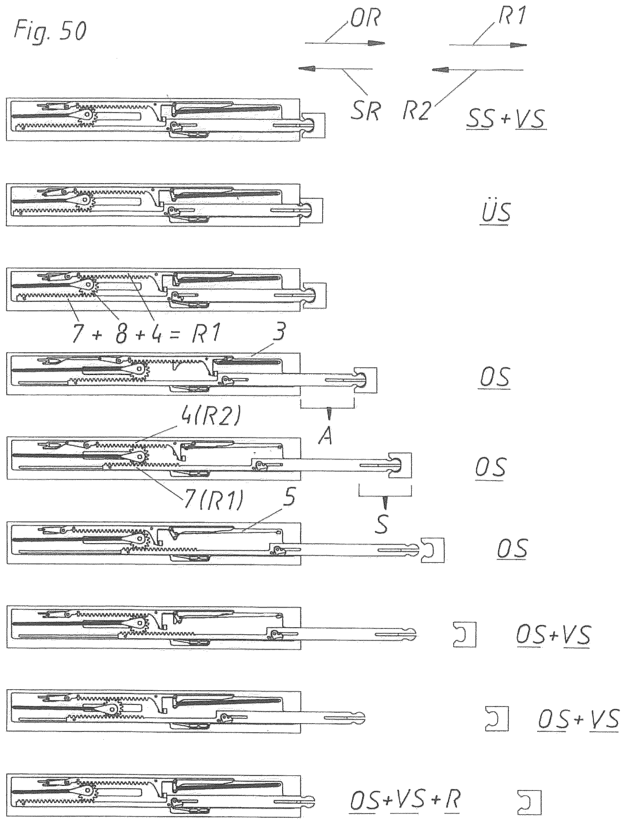

In Fig. 50 sind übersichtlich die einzelnen Stellungen gemäß der Fig. 41 bis 49 nochmals in einer Abfolge dargestellt. Im Vergleich des dritten Bildes mit dem vierten Bild dieser Fig. 50 ist ersichtlich, wie erfindungsgemäß das Ausstoßelement 4, das Bewegungsübertragungselement 8 und das Spannelement 7 über den Ausstoßweg A gemeinsam relativ zum Träger 3 bewegbar sind.

Die vierte Variante der Koppelvorrichtung 26 kann sinngemäß auf dieselbe Art und Weise bei den Ausstoßvorrichtungen 1 gemäß der ersten drei Ausführungsbeispiele eingesetzt. Der einzige wesentliche Unterschied liegt darin, dass bei der Entkoppelbewegung das Koppel- und Entkoppelelement 27 relativ zum Koppelstück 25 in Öffnungsrichtung OR und nicht in Schließrichtung SR bewegt wird.

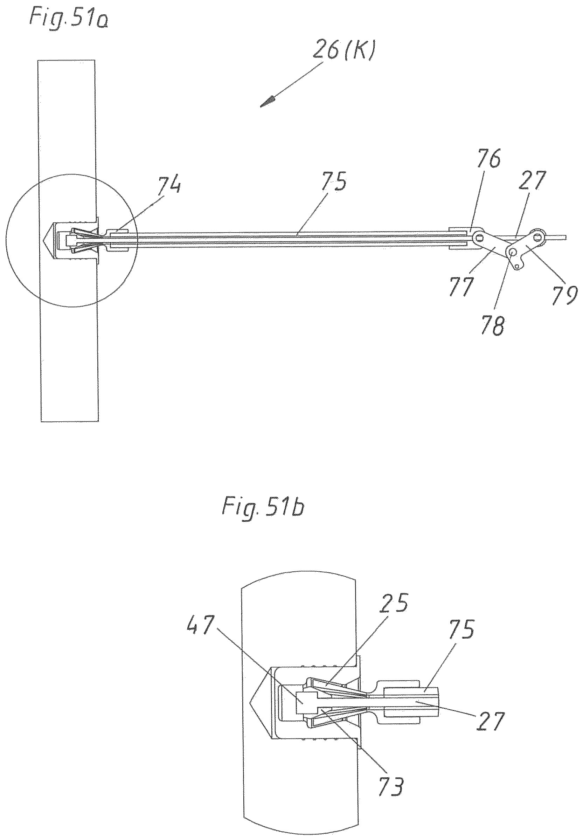

Fig. 51a zeigt in einer Seitenansicht eine Koppelvorrichtung 26 ohne die restlichen Teile einer Ausstoßvorrichtung 1. Diese Koppelvorrichtung 26 gemäß Fig. 51a befindet sich in der Koppelstellung K. Das Koppelstück 25 weist einen Koppelvorderteil 74, ein Koppelgehäuse 75 und ein Koppelhinterteil 76 auf. In diesem Koppelstück 25 ist das Koppel- und Entkoppelelement 27 geführt. Am Koppelhinterteil 76 ist der erste Koppelarm 77 gelenkig angebracht. Dieser erste Koppelarm 77 ist über das Drehgelenk 78 mit dem zweiten Koppelarm 79 gelenkig verbunden. Dieser zweite Koppelarm 79 wiederum ist mit dem Koppel- und Entkoppelelement 27 gelenkig verbunden. Im Detail gemäß Fig. 51b ist erkennbar, dass das Koppelstück 25 in seinem Kopfbereich zwei voneinander beabstandete Fortsätze aufweist. An der verbreiterten Spitze 47 des Koppel- und Entkoppelelements 27 ist ein Spreizelement 73 angeordnet, welches mit seinen Spreizflächen an Innenflächen der Fortsätze des Kopfbereichs des Koppelstücks 25 anliegt und diese auseinanderdrückt. Dadurch liegen diese Fortsätze an entsprechenden Gegenflächen im Aufnahmebereich des Koppelgegenstücks 24 an und ein formschlüssiger Halt liegt vor.

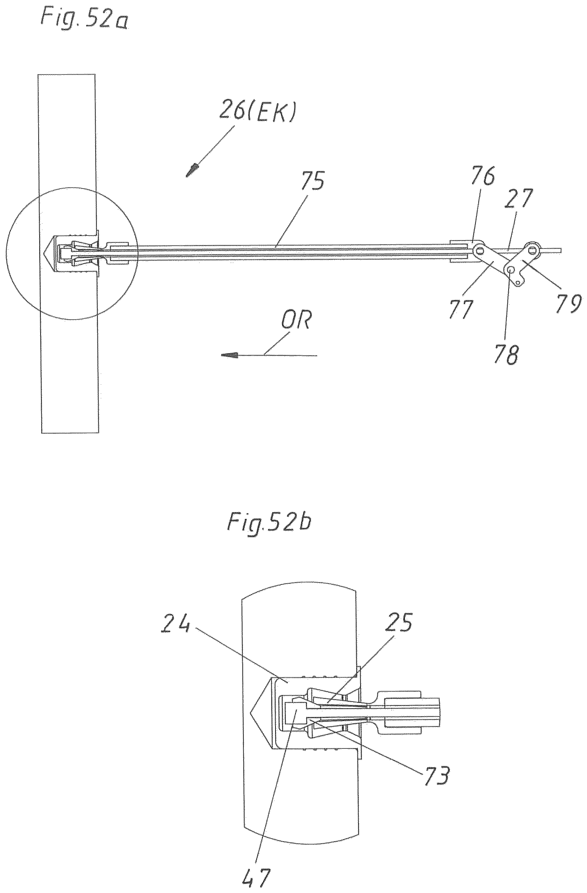

In Fig. 52a ist die Koppelvorrichtung 26 in Abhängigkeit vom Öffnungsweg O durch die Steuervorrichtung geschaltet worden. Im Konkreten ist bei Erreichen eines vorbestimmten Öffnungswegs VO der zweite Koppelarm 79 über einen nicht dargestellten Anschlag (z. B. im Bereich des Möbelkorpus 22 bzw. des Trägers 3) verschwenkt worden, sodass das Koppel- und Entkoppelelement 27 relativ zum Koppelstück 25 in Öffnungsrichtung OR geschoben wurde. Dadurch hat sich auch - wie im Detail gemäß Fig. 52b erkennbar - das an der Spitze 47 angeordnete Spreizelement 73 relativ zu den Fortsätzen in Öffnungsrichtung OR des Koppelstücks 25 verschoben, wodurch diese Fortsätze nicht mehr gespreizt sind. Die Entkoppelstellung EK der Koppelvorrichtung 26 ist erreicht. Das Koppelstück 25 und das Koppelgegenstück 24 befinden sich aber noch in loser Verbindung zueinander. Im Detail gemäß Fig. 52b ist zudem ersichtlich, dass die engsten Stellen des Aufnahmebereichs des Koppelgegenstücks 24 gerade so breit sind, dass das Spreizelement 73 wie auch die Fortsätze des Kopfbereichs des Koppelstücks 25 hindurchpassen. Es liegt somit kein formschlüssiger Halt mehr vor.

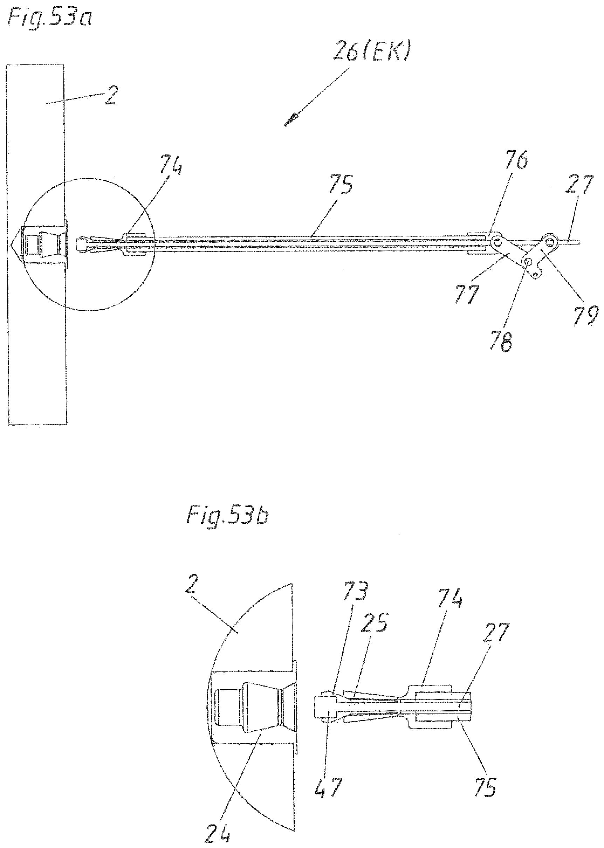

Aus Fig. 53a geht schließlich hervor, dass bei einer weiteren Öffnungsbewegung des bewegbaren Möbelteils 2 das Koppelgegenstück 24 vom Koppelstück 25 abheben kann, da eben kein formschlüssiger Halt mehr zwischen den Fortsätzen des Kopfbereichs des Koppelstücks 25 und dem Aufnahmebereich des Koppelgegenstücks 24 vorliegt.

Abschließend sei noch darauf hingewiesen, dass bei den Ausführungsbeispielen dieselben funktionellen Komponenten mit denselben Bezugszeichen versehen sind. So gelten die Vorteile und erwähnten Möglichkeiten zu den Ausführungsbeispielen auch sinngemäß für die jeweils anderen Ausführungsbeispiele.

## Patentansprüche

1. Ausstoßvorrichtung (1) zum Ausstoßen eines bewegbaren Möbelteils (2) aus einer Schließstellung (SS) entlang eines Öffnungswegs (O) in eine Offenstellung (OS), mit
- einem Träger (3) und
- einer Koppelvorrichtung (26) zum Koppeln der Ausstoßvorrichtung (1) mit dem bewegbaren Möbelteil (2), wobei die Koppelvorrichtung (26) ein relativ zum Träger (3) bewegbares Koppelstück (25) und ein am bewegbaren Möbelteil (2) oder an einem Möbelkorpus (22) angeordnetes Koppelgegenstück (24) aufweist, wobei die Koppelvorrichtung (26) eine Koppelstellung (K) und eine Entkoppelstellung (EK) aufweist und über die in der Koppelstellung (K) befindliche Koppelvorrichtung (26) die Ausstoßvorrichtung (1) mit dem bewegbaren Möbelteil (2) koppelbar ist,
**gekennzeichnet durch**
- eine Steuervorrichtung, durch die die Koppelvorrichtung (26) in Abhängigkeit vom Öffnungsweg (O) schaltbar ist, wobei bei einem vorbestimmten Öffnungsweg (VO) die Koppelvorrichtung (26) von der Koppelstellung (K) in die Entkoppelstellung (EK) gelangt.

2. Ausstoßvorrichtung nach Anspruch 1, **dadurch gekennzeichnet, dass** in der Koppelstellung (K) zwischen dem Koppelstück (25) und dem Koppelgegenstück (24) ein formschlüssiger Halt vorliegt, wobei dieser formschlüssige Halt durch die Steuervorrichtung aufhebbar ist.

3. Ausstoßvorrichtung nach Anspruch 1 oder 2, **dadurch gekennzeichnet, dass** die Steuervorrichtung ein relativ zum Koppelstück (25), vorzugsweise in einer Führungsbahn (28) im Träger (3) oder in einem Spannelement (7), bewegbares Koppel- und Entkoppelelement (27) aufweist.

4. Ausstoßvorrichtung nach Anspruch 3, **dadurch gekennzeichnet, dass** während der Öffnungsbewegung bis zum Erreichen des vorbestimmten Öffnungswegs (VO) das Koppelstück (25) gemeinsam mit dem Koppel- und Entkoppelelement (27) relativ zum Träger (3) bewegbar ist und ab Erreichen des vorbestimmten Öffnungswegs (VO) einerseits das Koppel- und Entkoppelelement (27) relativ zum Träger (3) feststeht und andererseits das Koppelstück (25) relativ zum Koppel- und Entkoppelelement (27) bewegbar ist.

5. Ausstoßvorrichtung nach Anspruch 4, **dadurch gekennzeichnet, dass** das Koppel- und Entkoppelelement (27) einen Anschlag (45) aufweist, über welches das Koppel- und Entkoppelelement (27) bei Erreichen des vorbestimmten Öffnungswegs (VO) am Träger (3), vorzugsweise an einem Kopfteil (37) des Trägers (3), ansteht.

6. Ausstoßvorrichtung nach einem der Ansprüche 3 bis 5, **dadurch gekennzeichnet, dass** zumindest ein Kopfbereich des Koppelstücks (25) durch das Koppel- und Entkoppelelement (27) spreizbar ist.

7. Ausstoßvorrichtung nach Anspruch 6, **dadurch gekennzeichnet, dass** bei gespreiztem Kopfbereich des Koppelstücks (25) die Koppelstellung (K) zwischen Koppelstück (25) und Koppelgegenstück (24) dadurch gegeben ist, dass ein formschlüssiger Halt zwischen dem Kopfbereich des Koppelstücks (25) und einem Aufnahmebereich des Koppelgegenstücks (24) vorliegt.

8. Ausstoßvorrichtung nach Anspruch 6 oder 7, **dadurch gekennzeichnet, dass** bei ungespreiztem Kopfbereich des Koppelstücks (25) die Entkoppelstellung (EK) zwischen Koppelstück (25) und Koppelgegenstück (24) dadurch gegeben ist, dass eine lose Verbindung zwischen dem Kopfbereich des Koppelstücks (25) und dem Aufnahmebereich des Koppelgegenstücks (24) vorliegt.

9. Ausstoßvorrichtung nach einem der Ansprüche 1 bis 8, **gekennzeichnet durch** ein Ausstoßelement (4) zum Ausstoßen des bewegbaren Möbelteils (2) aus der Schließstellung (SS) in eine Offenstellung (OS) und einem das Ausstoßelement (4) in Öffnungsrichtung (OR) des bewegbaren Möbelteils (2) kraftbeaufschlagenden Ausstoßkraftspeicher (5).

10. Ausstoßvorrichtung nach Anspruch 9, **gekennzeichnet durch** eine Verriegelungsvorrichtung (17) zum Verriegeln des Ausstoßelements (4) in einer Verriegelungsstellung (VS), wobei die Verriegelungsvorrichtung (17) durch Überdrücken des bewegbaren Möbelteils (2) in eine hinter der Schließstellung (SS) liegende Überdrückstellung (ÜS) entriegelbar ist.

11. Ausstoßvorrichtung nach Anspruch 9 oder 10, **gekennzeichnet durch** eine Spannvorrichtung (6) zum Spannen des Ausstoßkraftspeichers (5), vorzugsweise durch Ziehen am bewegbaren Möbelteil (2) in Öffnungsrichtung (OR).

12. Ausstoßvorrichtung nach Anspruch 11, **dadurch gekennzeichnet, dass** das Koppelstück (25) der Koppelvorrichtung (26) mit der Spannvorrichtung (6) verbunden ist, vorzugsweise einstückig mit einem Spannelement (7) der Spannvorrichtung (6) ausgebildet ist.

13. Ausstoßvorrichtung nach Anspruch 11 oder 12, **gekennzeichnet durch** eine Rückholvorrichtung (13) mit einem Rückholkraftspeicher (15) zum Bewegen der Spannvorrichtung (6) in eine Rückholstellung (R).

14. Möbel (21) mit einem Möbelkorpus (22), einem bewegbaren Möbelteil (2) und einer Ausstoßvorrichtung (1) nach einem der Ansprüche 1 bis 13 für das bewegbare Möbelteil (2).

15. Möbel nach Anspruch 14, **dadurch gekennzeichnet, dass** über die in der Koppelstellung (K) befindliche Koppelvorrichtung (26) die Ausstoßvorrichtung (1) mit dem bewegbaren Möbelteil (2) gekoppelt ist, und/oder in der Entkoppelstellung (EK) das bewegbare Möbelteil (2) von der Koppelvorrichtung (26) freigegeben ist.
